# EUROPÄISCHE PATENTSCHRIFT

(11) **EP 2 647 459 B1**
(45) Veröffentlichungstag und Bekanntmachung des Hinweises auf die Patenterteilung: **01.03.2017**
(21) Anmeldenummer: 12162872.1
(22) Anmeldetag: 02.04.2012
(51) Int. Cl.: B23F 9/02, B23F 1/02

(54) **Vorrichtung und Verfahren zum Bearbeiten von Kegelrädern unter Einsatz eines exzentrisch bewegten Schleifwerkzeugs**
Device and method for processing bevelled wheels using an eccentrically moved grinding tool
Dispositif et procédé de traitement de roues coniques utilisant un outil de rectification à mouvement excentrique

(43) Veröffentlichungstag der Anmeldung: 09.10.2013
(73) Patentinhaber: Klingelnberg AG, 8050 Zürich (CH)
(72) Erfinder: Dürr, Alexander, Saline, MI Michigan 48176 (US)
(74) Vertreter: Heusch, Christian

(56) Entgegenhaltungen:
- WO-A1-2008/036200
- US-A- 3 127 709
- STADTFELD H: "Guidelines for Modern Bevel Gear Grinding", GEAR TECHNOLOGY, RANDALL PUBLISHING CO. ELK GROVE, ILLINOIS, US, 1. August 2008 (2008-08-01), Seiten 42-53, XP007920015, ISSN: 0743-6858

## Beschreibung

Die Erfindung betrifft Vorrichtungen zum Bearbeiten von Kegelrädern unter Einsatz eines Schleifwerkzeugs, das exzentrisch bewegt wird.

### Stand der Technik

Es ist bekannt, dass man Kegelräder unter Einsatz eines Schleifwerkzeugs bearbeiten kann. Häufig kommen dabei sogenannte Topfschleifscheiben zum Einsatz.

Bei dem sogenannten diskontinuierlichen Profilschleifen geht es um einen Schleifprozess nach dem Einzelteilverfahren. Insbesondere kommt das diskontinuierliche Profilschleifen zum Einsatz, um getauchte Tellerräder zu fertigen. Beim Eintauchen der Topfschleifscheibe wird das Profil der Topfschleifscheibe in das Material des zu fertigenden Tellerrades abgebildet. Das entsprechende Verfahren wird auch als Teilformverfahren bezeichnet.

Beim Schleifen spiralverzahnter Kegelräder wird die konkave Zahnflanke einer Zahnlücke mit der äußeren Umfangsfläche und die konvexe Zahnflanke der Zahnlücke mit der inneren Umfangsfläche der Topfschleifscheibe erzeugt. Geschieht dies im Zweiflankenschnitt, auch Completing genannt, was beim Tauchschleifen von Tellerrädern üblich ist, so werden beide Zahnflanken der Zahnlücke gleichzeitig geschliffen. Im Einflankenschliff wird hingegen entweder nur die konkave oder nur die konvexe Zahnflanken der Zahnlücke geschliffen.

Dabei ergibt sich beim Tauchschleifen von Spiralkegelrädern eine grosse Berührungsfläche über die gesamte Zahnbreite des Werkstücks. Es kann hier keine Kühlflüssigkeit in die Schleifzonen gelangen. Aufgrund der grossen Berührungsfläche und der schlechten Kühlung kann es an den Zahnflanken des Werkstücks zu sogenanntem Schleifbrand kommen. Ausserdem kann es auch zu Problemen in der Spanabfuhr kommen und die Topfschleifscheibe kann sich mit Metallpartikeln zusetzen.

Es ist bekannt, dass man der Tauchbewegung der Schleifscheibe eine exzentrische Zusatzbewegung des Schleifscheibenmittelpunkts überlagert, um so die erwähnten Probleme zu beheben oder deren Einfluss auf den Schleifprozess zu reduzieren. Durch das erwähnte Überlagern bewegt sich der Topfschleifscheibenmittelpunkt auf einer Kreisbahn um einen Mittelpunkt. Der Radius dieser Kreisbahn wird als Exzenterhub bezeichnet und ist klein im Vergleich zum Radius der Topfschleifscheibe. Aufgrund dieser Bewegung wird die Topfschleifscheibe das Werkstück geometrisch betrachtet nur in einem Punkt berühren, in der Realität handelt es sich jedoch infolge der Vorschubsbewegung um einen lokal begrenzen Bereich in dem die Berührung statt findet. Das Verhältnis der Exzenterdrehzahl zur Drehzahl der Topfschleifscheibe ist das sogenannte Exzenterverhältnis.

Die exzentrische Zusatzbewegung kann in Schleifmaschinen durch das Einstellen des Exzenterverhältnisses, respektive der Exzenterdrehzahl in Form einer festen Vorgabe erfolgen.

Durch die Exzenterbewegung lässt sich ein unerwünscht grosser Flächenkontakt zwischen der Schleifscheibe und dem Tellerrad vermeiden. Details zur Überlagerung einer zyklischen Exzenterbewegung sind zum Beispiel den deutschen Offenlegungsschriften DE 2721164 A und DE 2945483 A zu entnehmen. Das Prinzip der Exzenterbewegung geht offensichtlich auf den Erfinder Waguri zurück, der im Jahr 1967 entsprechende Entwicklungen vorgenommen hat.

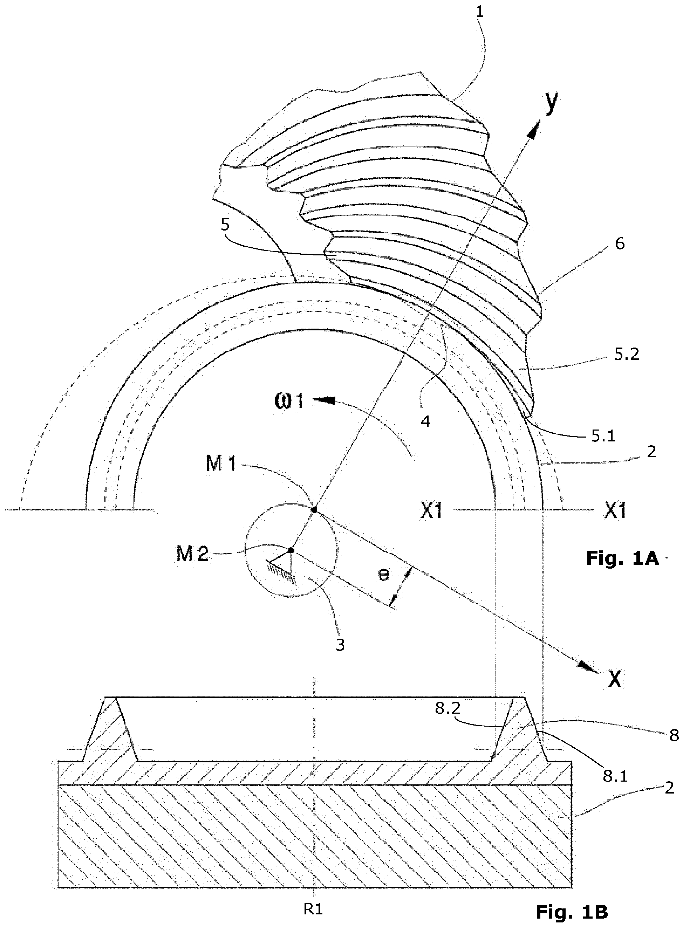

In Fig. 1A ist eine schematische Darstellung des sogenannten Waguri-Ansatzes gezeigt, bei dem sich eine Topfschleifscheibe 2 um einen Scheibenmittelpunkt M1 dreht, der gegenüber dem Mittelpunkt M2 einer Wagurischeibe 3 um einen kleinen Abstand e (Waguri-Exzentrizität genannt) versetzt ist. Das Exzenterverhältnis ist als Drehzahl des Exzenters geteilt durch die Drehzahl der Topfschleifscheibe 2 definiert. Die Topfschleifscheibe 2 dreht sich mit der Winkelgeschwindigkeit ω1 um den Mittelpunkt M1. Die Exzenterbewegung bewirkt für den Mittelpunkt M1 der Topfschleifscheibe 2 eine Kreisbewegung um M2. Diese Kreisbewegung hat Bewegungskomponente in x-Richtung und in y-Richtung.

Bei sonst konstanten Verhältnissen hängen die Häufigkeit der Berührung der Topfschleifscheibe 2 mit der Zahnflanke, die Lage dieses Berührbereichs auf der Topfschleifscheibe 2 und die Phasenlage der Berührung von konkaver und konvexer Zahnflanke beim Zweiflankenschnitt ebenso wie dessen mögliche Verlagerung auf der Topfschleifscheibe 2 vom gewählten Exzenterverhältnis ab.

Geht man beispielsweise davon aus, dass bei einem Exzenterdrehwinkel von 0 Grad (die 0 Grad-Stellung fällt hier mit der y-Achse zusammen) die Berührung zwischen der Topfschleifscheibe 2 und der konkaven Flanke 5.1 einer Zahnlücke 5 im Bereich 4 (siehe Fig. 1A) erfolgt, so wird nach einer Drehung des Exzenters um 180 Grad die Berührung zwischen der Topfschleifscheibe 2 und der konvexen Flanke (in Fig. 1A ist konvexen Flanke der nächsten Zahnlücke mit dem Bezugszeichen 5.2 bezeichnet) der Zahnlücke 5 erfolgen.

Ist das Exzenterverhältnis 1, so dreht sich der Exzenter bei einer Umdrehung der Topfschleifscheibe 2 einmal. Die Topfschleifscheibe 2 berührt bei jeder Vollumdrehung einmal die konkave Flanke 5.1 der Zahnlücke 5 (bei 0°) und einmal die konvexe Flanke der Zahnlücke 5 (bei 180°). Die Berührung findet immer im gleichen Bereich statt. Ist das Exzenterverhältnis 2 so erfolgen zwei Berührungen der Topfschleifscheibe 2 mit konkaver Flanke 5.1 der Zahnlücke 5 (bei 0° und 180°) respektive mit der konvexe Flanke der Zahnlücke 5 (bei 90° und 270°) während einer Vollumdrehung der Topfschleifscheibe 2. Bei einem Exzenterverhältnis von 0,5 wird die konkave Flanke 5.1 bei 0° und 720° und die konvexe Flanke bei 360° und 1080° berührt. Diese Gradangaben beziehen sich jeweils auf ein ortsfestes Koordinatensystem der Topfschleifscheibe 2 und in den genannten drei Sonderfällen findet keine Verschiebung der Berührbereiche entlang des Schleifscheibenumfangs von Vollumdrehung der Topfschleifscheibe 2 zu Vollumdrehung statt.

Im Allgemeinen findet jedoch eine Verschiebung des Berührbereichs auf der Topfschleifscheibe 2 pro Vollumdrehung statt, so dass der gesamte Schleifscheibenumfang zum schleifenden Bearbeiten des Werkstücks 1 benutzt wird. Das Exzenterverhältnis, das vorgegeben wird, kann auch eine rationale Zahl Q sein. Ein praktisches Beispiel ist ein Exzenterverhältnis von 0,7. In diesem Fall würde die Berührung der konkaven Flanke 5.1 bei 0° und 514,2857° (entspricht 154,2857° auf dem Schleifscheibenumfang) und die der konvexen Flanke bei 257,1428° und 771,4286° (entspricht 51,4286° auf dem Schleifscheibenumfang) erfolgen. Wenn die Topfschleifscheibe 2 mehrere Vollumdrehungen ausführt, verlagern sich die Berührbereiche immer weiter und es wird letztendlich der gesamte Schleifscheibenumfang am Profil 8 zum schleifenden Bearbeiten eingesetzt.

Fig. 1B zeigt einen Schnitt entlang der Linie X1-X1 durch einen Teil der Topfschleifscheibe 2. In Fig. 1B kann man das Profil 8 der Topfschleifscheibe 2 erkennen.

Durch die überlagerte Exzenterbewegung wird erzielt, dass ein (zu) grosser Flächenkontakt zwischen dem Aussenumfang 8.1 des Profils 8 der Topfschleifscheibe 2 und der gesamten Fläche der konkaven Flanke 5.1 des Werkstücks 1 und dem Innenumfang 8.2 des Profils 8 der Topfschleifscheibe 2 und der gesamten Fläche der konvexen Flanke vermieden wird.

Details zu einem Schleifverfahren mit überlagerter Exzenterbewegung werden z.B. in dem Dokument "Guidelines for Modern Bevel Gear Grinding", H. J. Stadtfeld, Mai 2008 überarbeitet, The Gleason Works, USA, auf den Seiten 14 und 15 beschrieben.

Im Folgenden ist generell von Schleifscheiben die Rede, auch wenn es im konkreten Fall meistens um Topfschleifscheiben geht.

Untersuchungen haben ergeben, dass sich an Schleifscheiben, die nach dem Waguri-Ansatz exzentrisch gelagert sind, trotzdem Schleifbrand bilden kann. Ausserdem können sich diese exzentrisch gelagerten Schleifscheiben weiterhin auch mit Metallrückständen zusetzen. Ausserdem können diese Schleifscheiben eine nicht ausreichende Standzeit aufweisen.

Von daher liegt der Erfindung die Aufgabe zugrunde, einen Ansatz bereit zu stellen, der es ermöglicht die Standzeiten solcher exzentrisch gelagerter Schleifscheiben weiter zu verbessern.

Die Aufgabe wird erfindungsgemäss durch eine Vorrichtung gemäss Patentanspruch 1 und ein Verfahren gemäss Patentanspruch 12 gelöst.

Erfindungsgemäss wurde diese Aufgabe dadurch gelöst, dass eine Vorrichtung zum Einsatz kommt, die mit einer Werkstückspindel zur Aufnahme eines Kegelradwerkstücks (vorzugsweise eines Spiralkegelrad-Werkstücks), einer Werkzeugspindel zur Aufnahme einer Schleifscheibe und mehreren Antrieben zum Bearbeiten des Kegelradwerkstücks ausgestattet ist. Die Schleifscheibe führt beim Bearbeiten des Kegelradwerkstücks eine Rotation um die Rotationsachse der Werkzeugspindel aus und die Schleifscheibe greift in das Kegelradwerkstücks ein, um Material abzutragen. Der Rotation um die Rotationsachse der Werkzeugspindel ist eine Exzenterbewegung überlagert, damit die Schleifscheibe nicht andauernd mit seiner äusseren und/oder inneren abrasiven Oberfläche Material entlang der gesamten konkaven und/oder konvexen Flanken abträgt, sondern intermittierend und nur an einer Zahl n {mit n ∈ Q} von Berührpunkten eines Vollkreises der abrasiven Oberflächen in das Kegelradwerkstück eingreift.

Die Erfindung zeichnet sich dadurch aus, dass die Vorrichtung dazu ausgelegt ist eine Verstellung der Exzenterbewegung zu ermöglichen, um nach einer ersten Bearbeitungsphase im Rahmen einer weiteren Bearbeitungsphase eine Zahl m {mit m ∈ Q}von Berührpunkten des Vollkreises der abrasiven Oberflächen der Schleifscheibe vorzugeben, wobei sich die m Berührpunkte von den n Berührpunkten durch einen Winkelabstand unterscheiden. Meistens gilt folgende Bedingung: m=n.

Gemäss Erfindung bezieht sich der Winkelabstand stets auf die Schleifscheibe, d.h. der Winkelabstand ist im Koordinatensystem der Schleifscheibe festgelegt. Das Koordinatensystem der Schleifscheibe ist fest mit der Schleifscheibe verbunden und dreht sich mit dieser um die Rotationsachse der Schleifscheibe. Auch die Festlegung der n und m Berührpunkte bezieht sich auf die Schleifscheibe.

Wenn hier von den sogenannten Berührpunkten die Rede ist, ist zu berücksichtigen, dass es sich bei den Berührpunkten um geometrische Werte handelt, die sich aus einer theoretisch rechnerischen Betrachtung ergeben. In der Praxis finden die Berührungen zwischen Schleifscheibe und Werkstück in sogenannten Berührbereichen statt, die aber durch die jeweiligen Berührpunkte definiert sind.

Erfindungsgemäss wird der Winkelabstand so gewählt, dass sukzessive eine winkelmäßige (Gleich-)Verteilung aller Berührbereiche über den Vollkreis der abrasiven Aussen und Innenoberfläche des Schleifwerkzeugs erfolgt. D.h. die (Gleich-)Verteilung aller Berührbereiche ist ortsfest mit der Schleifscheibe verbunden.

Um eine Kontrolle der winkelmässigen Gleichverteilung vornehmen zu können, muss der jeweilige Winkel (Hubwinkel), bei dem die Schleifscheibe mit dem Material des Kegelradwerkstücks in Kontakt tritt, in Bezug auf die Schleifscheibe fixiert sein.

Mit anderen Worten ausgedrückt, werden während einer ersten Bearbeitungsphase andere Hubpunkte in Bezug auf die Schleifscheibe festgelegt als in einer weiteren Bearbeitungsphase.

Weitere vorteilhafte Ausführungsformen sind den abhängigen Patentansprüchen zu entnehmen.

### ZEICHNUNGEN

Ausführungsbeispiele der Erfindung werden im Folgenden unter Bezugnahme auf die Zeichnungen näher beschrieben.
- **FIG. 1A**: zeigt eine stark schematisierte Ansicht einer Topfschleifscheibe, die in bekannter Art und Weise auf einer Wagurischeibe exzentrisch gelagert ist und die eine Zahnlücke eines Tellerrad-Werkstücks bearbeitet;
- **FIG. 1B**: zeigt eine stark schematisierte Schnittansicht eines Teils der Topfschleifscheibe nach Fig. 1A entlang der Linie X1-X1;
- **FIG. 2**: zeigt eine schematisierte Ansicht eines Teils einer erfindungsgemässen Schleifmaschine mit einer Topfschleifscheibe, die auf einer Werkzeugspindel drehbar gelagert ist, und mit einem zu bearbeitenden Kegelradwerkstück, das auf einer Werkstückspindel drehbar gelagert ist, wobei sich im gezeigten Moment die Topfschleifscheibe und das Kegelradwerkstück nicht im Eingriff befinden;
- **FIG**. **3**: zeigt eine stark schematisierte Detailansicht eines Teils einer erfindungsgemässen Schleifmaschine mit einer teilweise geschnittenen Topfschleifscheibe, die auf einer Werkzeugspindel drehbar gelagert ist und mit einem Kegelradwerkstück (hier ein spiralverzahntes Ritzel), das auf einer Werkstückspindel drehbar gelagert ist, wobei sich im gezeigten Moment die Topfschleifscheibe und das Kegelradwerkstück im Eingriff befinden;

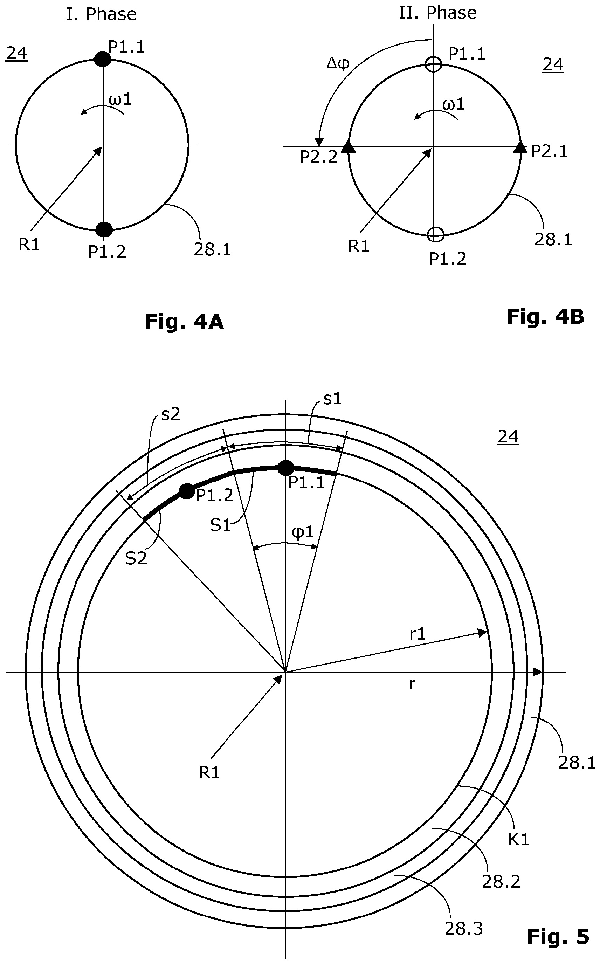

- **FIG. 4A**: zeigt eine stark schematisierte Ansicht einer Schleifscheibe, die exzentrisch gelagert ist und gemäss Erfindung in einer ersten Bearbeitungsphase im Einflankenschnitt pro Vollumdrehung an zwei festgelegten (Hub-) Punkten mit dem Material eines zu bearbeitenden Werkstücks in Kontakt kommt;
- **FIG. 4B**: zeigt eine stark schematisierte Ansicht der Schleifscheibe nach Fig. 4A, die in einer zweiten Bearbeitungsphase im Einflankenschnitt pro Vollumdrehung an zwei anderen festgelegten (Hub-)Punkten mit dem Material eines zu bearbeitenden Werkstücks in Kontakt kommt;
- **FIG. 5**: zeigt eine schematisierte Ansicht der Topfseite einer Schleifscheibe, die exzentrisch gelagert und gemäss Erfindung in mehrere Kreissegmente unterteilt ist, wobei jedes Kreissegment einen (Hub-) Punkt aufweist;

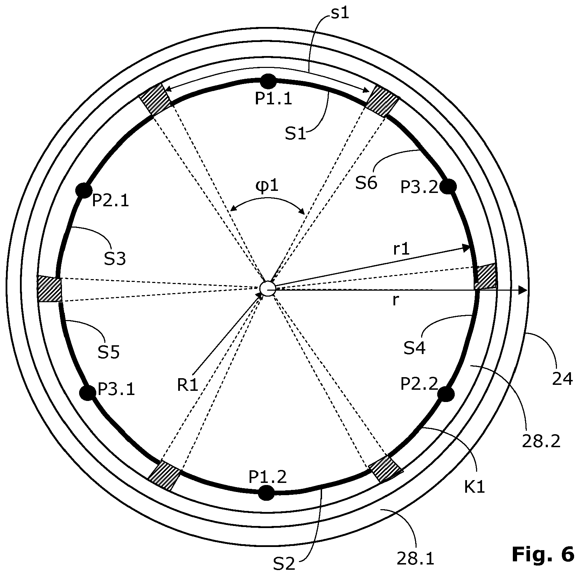

- **FIG. 6**: zeigt eine schematisierte Ansicht der Topfseite einer weiteren Schleifscheibe, die exzentrisch gelagert und gemäss Erfindung in sechs Kreissegmente mit je einem (Hub-)Punkt unterteilt ist, wobei die Kreissegmente voneinander beabstandet sind;

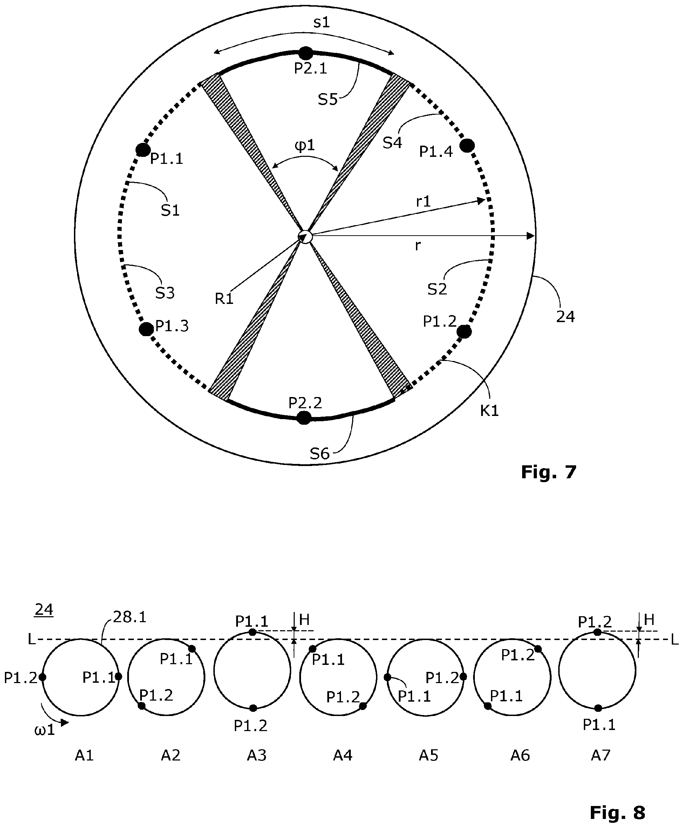

- **FIG. 7**: zeigt eine stark schematisierte Ansicht der Topfseite einer Schleifscheibe, die exzentrisch gelagert und gemäss Erfindung in mehrere Kreissegmente zur Schrupp- und Schlichtbearbeitung unterteilt ist;
- **FIG. 8**: zeigt eine stark schematisierte Reihe von Momentansichten A1 bis A7 einer stark schematisierten Schleifscheibe, die exzentrisch gelagert ist und gemäss Erfindung zwei Berührpunkte aufweist und im Einflankenschnitt eingesetzt wird (die kreisförmige Exzenterbewegung wurde hier durch eine einfache Auf- und Abbewegung ersetzt);

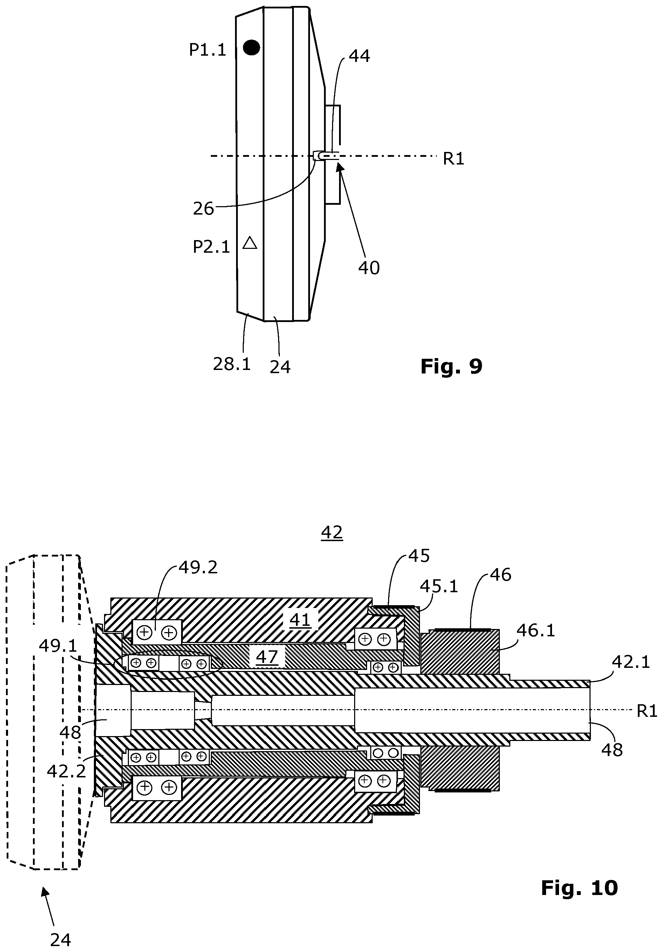

- **FIG. 9**: zeigt eine schematisierte Seitenansicht einer Topfschleifscheibe, die exzentrisch gelagert ist, die im Einflankenschnitt zum Einsatz kommt und die gemäss Erfindung mehrere Berührpunkte am Aussenumfang des Profils aufweist, wobei zwei der Berührpunkte sichtbar sind;
- **FIG. 10**: zeigt eine schematisierte Schnittansicht einer beispielhaften Werkzeugspindel mit Topfschleifscheibe der Erfindung, die über zwei Riemen und Riemenscheiben angetrieben werden kann.

### Detaillierte Beschreibung

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll.

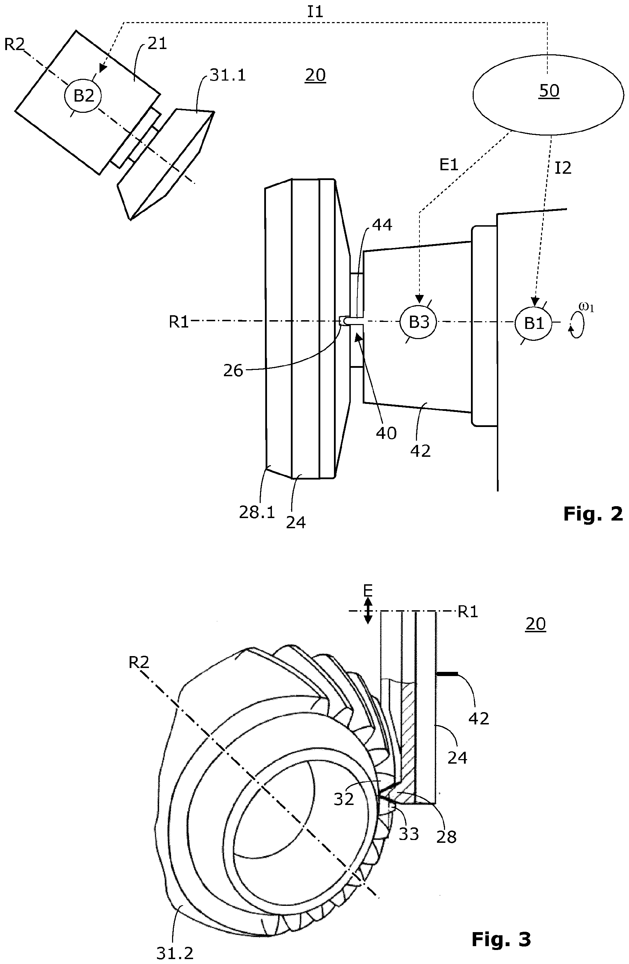

Eine Vorrichtung 20 der Erfindung umfasst, wie in Fig. 2 und 3 schematisch gezeigt, eine Werkstückspindel 21, die zur Aufnahme eines Kegelradwerkstücks 31 (hier in Form eines stilisiert dargestellten Tellerrads 31.1) ausgelegt ist. Ausserdem umfasst sie eine Werkzeugspindel 42 zur Aufnahme einer Schleifscheibe 24 (hier in Form einer Topfschleifscheibe) sowie mehrere Antriebe (z.B. B1, B2, B3 und weitere Antriebe, die nicht in den Figuren gezeigt sind) zum Bearbeiten des Kegelradwerkstücks 31. Die Schleifscheibe 24 führt beim Bearbeiten des Kegelradwerkstücks 31 eine Rotation (die entsprechende Winkelgeschwindigkeit wird mit ω1 bezeichnet) um die Rotationsachse R1 der Werkzeugspindel 42 aus. Die Schleifscheibe 24 greift in das Kegelradwerkstück 31 ein, wie in Fig. 3 anhand eines spiralverzahnten Ritzels 31.2 gezeigt, um Material abzutragen. Der Rotation um die Rotationsachse R1 ist eine Exzenterbewegung überlagert, damit die Schleifscheibe 24 nicht ununterbrochen mit seiner abrasiven Aussenfläche und/oder Innenfläche Material abträgt. Gemäss Erfindung greift die Schleifscheibe 24 nur an n Berührpunkten (Hubpunkte genannt) eines Vollkreises der abrasiven Aussenfläche und/oder Innenfläche der Schleifscheibe 24 in das Kegelradwerkstück 31 ein, um dort in den Berührbereichen Material abzutragen.

In Fig. 3 ist die Exzenterbewegung E durch einen Doppelpfeil schematisch dargestellt. Im Prinzip wird die Rotationsachse R1 durch die überlagerte kreisförmige Exzenterbewegung E in dem Axialschnitt der Topfschleifscheibe 24 leicht auf und ab bewegt. Im Dreidimensionalen betrachtet, vollzieht die Topfschleifscheibe 24 eine Exzenterbewegung entlang einer kleinen Kreisbahn, wie z.B. in Fig. 1A angedeutet und wie im Zusammenhang mit dieser Figur beschrieben.

In den Figuren 2 und 3 ist eine topfförmige Schleifscheibe 24 (Topfschleifscheibe genannt) gezeigt, an deren Profil 28 eine ringförmig umlaufende Aussenfläche 28.1 und eine ringförmig umlaufende Innenfläche 28.2 vorgesehen sind. In Fig. 3 bearbeitet die ringförmig umlaufende Aussenfläche 28.1 die konkave Zahnflanke des Zahnes 33 und die ringförmig umlaufende Innenfläche 28.2 die konvexe Zahnflanke des Zahnes 32 eines Ritzelwerkstücks 31.2.

Der Einfachheit halber wird in den folgenden Figuren das Prinzip der Erfindung anhand von Schleifscheiben 24 erläutert, die entweder zum Einflankenschnitt von konkaven Zahnflanken oder zum Einflankenschnitt von konvexen Zahnflanken eingesetzt werden. Dabei liegen die Berührpunkte bzw. die entsprechenden Berührbereiche entweder auf der ringförmig umlaufenden Aussenfläche 28.1 oder auf der ringförmig umlaufenden Innenfläche 28.2 der Schleifscheibe 24. D.h. die Berührpunkte oder Berührbereiche liegen entweder aussen oder innen am Profil 28. In Fig. 9 ist ein Beispiel gezeigt, bei dem die Berührpunkte oder Berührbereiche auf der ringförmig umlaufenden Aussenfläche 28.1 liegen.

Bei Schleifscheiben 24, die erfindungsgemäss im Zweiflankenschnitt zum Einsatz kommen, liegen die Berührbereiche sowohl auf der Aussenfläche 28.1 als auch auf Innenfläche 28.2, wobei die Berührbereiche der Aussenfläche 28.1 gegenüber den Berührbereichen der Innenfläche 28.2 winkelverdreht sind.

Dabei gilt folgende Regel:
- Bei einem Exzenterverhältnis EV, das 1 beträgt, gibt es beim Einflankenschnitt nur eine Berührung an der Aussenfläche 28.1 oder an der Innenfläche 28.2;
- Bei einem Exzenterverhältnis EV, das 1 beträgt, gibt es beim Zweiflankenschnitt nur eine Berührung an der Aussenfläche 28.1 und eine an der Innenfläche 28.2, wobei die Berührungspunkte um 180 Grad winkelverdreht sind;
- Bei einem Exzenterverhältnis EV, das 2 beträgt, gibt es beim Einflankenschnitt nur zwei Berührungen an der Aussenfläche 28.1 oder an der Innenfläche 28.2;
- Bei einem Exzenterverhältnis EV, das 2 beträgt, gibt es beim Zweiflankenschnitt zwei Berührungen an der Aussenfläche 28.1 und zwei an der Innenfläche 28.2, wobei die Berührungspunkte um 90 Grad winkelverdreht sind. Die Berührungspunkte der Aussenfläche 28.1 liegen z.B. bei 0 Grad und 180 Grad und die Berührungspunkte der Innenfläche 28.2 liegen z.B. bei 90 Grad und 270 Grad.

Diese Regel lässt sich wie folgt verallgemeinern:
- beim Einflankenschnitt gibt das Exzenterverhältnis EV im Prinzip die Anzahl der Berührungspunkte der Aussenfläche 28.1 oder der Innenfläche 28.2 pro Vollumdrehung an. Genauer ausgedrückt ist das Exzenterverhältnis EV also eher ein Durchschnittswert der Anzahl der Schnitte pro Umdrehung oder einfach das Verhältnis der Schnitte zur Umdrehung;
- beim Zweiflankenschnitt gibt das Exzenterverhältnis EV direkt die Anzahl der Berührungspunkte der Aussenfläche 28.1 und der Innenfläche 28.2 pro Vollumdrehung an, wobei die Berührungspunkte der Aussenfläche 28.1 gegenüber den Berührungspunkten der Innenfläche 28.2 um 360 Grad/2*EV gegeneinander winkelverdreht sind. Auf einen Berührungspunkt der Innenfläche 28.2 folgt stets ein Berührungspunkt der Aussenfläche 28.1, usw.

Beim Bearbeiten werden die Schleifscheibe 24 und das Kegelradwerkstück 31 miteinander in Eingriff gebracht, wie z.B. in Fig. 3 andeutungsweise gezeigt. Bei Tellerrädern 31.1 (siehe Fig. 2) wird die Schleifscheibe 24 in das Kegelradwerkstück 31 eingetaucht. Bei Ritzeln 31.2 (siehe Fig. 3) wälzen die Schleifscheibe 24 und das Kegelradwerkstück 31.2 miteinander.

Ein solcher Ansatz ist z.B. aus der deutschen Offenlegungsschrift DE 2721164 A bekannt. Durch einen bekannten Wälzprozess werden die Zahnprofile der Zähne 32, 33 am Kegelradwerkstück 31.2 erzeugt, wobei im gezeigten Beispiel gleichzeitig die rechte Flanke und linke Flanke einer Zahnlücke im Zweiflankenschnitt schleifend bearbeitet werden. In Fig. 3 ist zu erkennen, wie im gezeigten Moment eine Zahnlücke zwischen den Zähnen 32, 33 des Kegelradwerkstücks 31.2 bearbeitet werden. Der Profilbereich 28 der Schleifscheibe 24, der in die Zahnlücken eingreift, definiert die Zahnform in Zahnlängsrichtung. Die Schneidbewegung der Schleifscheibe 24 relativ zum Material des Kegelradwerkstücks 31.2 führt in bekannter Art und Weise zum Abtragen von Material.

Der beschriebenen Drehbewegung ist eine Exzenterbewegung E überlagert, wie im Zusammenhang mit Fig. 1, 2 und 3 beschrieben. Diese Exzenterbewegung E ist in Fig. 3 (in die Zeichenebene projiziert) zu erkennen. Die Drehbewegung inklusive der Exzenterbewegung E und etwaigen anderen Bewegungen sind durch eine CNC-Steuerung 50 CNC gesteuert, so dass keine mechanische Bewegungskontrolle/-koordination erforderlich ist. Die CNC-Steuerung 50 ist in Fig. 2 angedeutet. Die Pfeile I1 und I2 deuten die steuerungstechnischen Verbindungen der CNC-Steuerung 50 mit den Antriebsmotoren B1, B2 der Vorrichtung 20 an. Zusätzlich kann es je nach Situation und Phase der Bearbeitung weitere Bewegungen der Achsen der Vorrichtung 20 geben, die nicht in den Figuren gezeigt sind, da sie aus dem Stand der Technik hinlänglich bekannt sind.

Die Exzenterbewegung kann durch die CNC-Steuerung 50 winkelgenau der Rotationsbewegung ω1 der Schleifscheibe 24 überlagert werden. In Fig. 2 ist durch einen Pfeil E1, der von der CNC-Steuerung 50 zur Werkzeugspindel 42 führt, schematisch angedeutet, dass die CNC-Steuerung 50 z.B. ein Exzentersignal E1 aussenden kann, um die Exzenterbewegung durch Einwirken auf einen Exzenterantrieb B3 der Werkzeugspindel 42 zu kontrollieren.

Ohne die überlagerte Exzenterbewegung E, wären die äusseren und/oder inneren Schleifflanken (Aussenflächen 28.1 und Innenflächen 28.2 genannt) der Schleifscheibe 24 (hier der topfförmigen Schleifscheibe) in Umfangsrichtung längs eines Kreisbogensegments mit dem Werkstück 31 in Eingriff. Die Schleifbrandgefahr am Werkstück 31 wäre entsprechend hoch, wie eingangs beschrieben, so dass man z.B. nur mit einer reduzierten Zustellung arbeiten könnte.

Die Vorrichtung 20 ist gemäss allen Ausführungsformen der Erfindung speziell so ausgelegt, dass eine Verstellung der Exzenterbewegung E möglich ist, um nach einer ersten Bearbeitungsphase (I. Phase, siehe z.B. Fig. 4A), die durch n Berührpunkte des Vollkreises definiert ist, im Rahmen einer weiteren Bearbeitungsphase (II. Phase, siehe z.B. Fig. 4B) m Berührpunkte des Vollkreises der abrasiven Oberfläche(n) vorzugeben. Die m Berührpunkte unterscheiden sich von den n Berührpunkten durch einen Winkelabstand Δϕ, der auf die Schleifscheibe 24 bezogen ist. D.h. die m Berührpunkte sind gegenüber den n Berührpunkten um den Winkelabstand Δϕ winkelverdreht.

Dieses Prinzip wird im Folgenden anhand der Figuren 4A und 4B erläutert. Gezeigt sind hier Schleifscheiben 24, die im Einflankenschnitt eingesetzt werden. Von der Schleifscheibe 24 ist nur die Aussenfläche 28.1 durch einen Kreis dargestellt. Die Schleifscheibe 24 wird bei allen Ausführungsformen der Erfindung in einer fest vorgegebenen Winkelstellung mit der Werkzeugspindel 42 verbunden. Vorzugsweise kommt hier ein Positionierungselement 44 zum Einsatz, das z.B. an der Werkzeugspindel 42 angeordnet ist und in eine Ausnehmung 26 der Schleifscheibe 24 eingreift, wie in Fig. 2 schematisch angedeutet. Vorzugsweise ist das Positionierungselement 44 bei allen Ausführungsformen so ausgelegt, dass die Schleifscheibe 24 nur in einer festen Winkelstellung verdrehgesichert mit der Werkzeugspindel 42 verbunden werden kann.

Nun wird für die erste Bearbeitungsphase (I. Phase, siehe z.B. Fig. 4A) die Exzentrizität (z.B. durch Vorgabe des Exzenterverhältnisses EV=2) so vorgegeben, dass die Schleifscheibe 24 das Werkstück 31 nur an den Positionen 0 Grad (entspricht der 12 Uhr Stellung) und 180 Grad (entspricht der 6 Uhr Stellung) der Schleifscheibe 24 berührt. EV=2 entspricht beim Einflankenschnitt zwei Berührungen entweder der Aussenfläche 28.1 pro Vollumdrehung oder der Innenfläche 28.2 pro Vollumdrehung. Diese Berührpunkte (Hubpunkte), die fix sind in Bezug auf die Schleifscheibe 24, werden in Fig. 4A mit P1.1 und P1.2 bezeichnet. Die aktiven Berührpunkte P1.1 und P1.2 sind in Fig. 4A durch schwarz gefüllte Kreise angedeutet. Nachdem die erste Bearbeitungsphase beendet ist, kommt die Schleifscheibe 24 (direkt oder nach einer Zeitdauer) in einer weiteren Bearbeitungsphase zum Einsatz, wie z.B. in Fig. 4B gezeigt. Um nun zu verhindern, dass in der weiteren Bearbeitungsphase die Schleifscheibe 24 wiederum an den selben Berührpunkten P1.1 und P1.2 aktiv beansprucht wird, werden neue (andere) aktive Berührpunkte P2.1 und P2.2 vorgegeben. Diese aktiven Berührpunkte P2.1 und P2.2 sind in Fig. 4B durch schwarz gefüllte Dreiecke angedeutet. Die Berührpunkte P1.1 und P1.2 (inaktive Berührpunkte genannt), die zuvor zum Einsatz gekommen sind, sind in Fig. 4B durch weiß gefüllte Kreise angedeutet. Bei dem in den Figuren 4A und 4B gezeigten Beispiel kommen in der ersten Bearbeitungsphase n=2 aktive Berührpunkte P1.1 und P1.2 zum Einsatz, während in der zweiten Bearbeitungsphase m=2 aktive Berührpunkte P2.1 und P2.2 zum Einsatz kommen. Der Winkelabstand Δϕ beträgt hier 90 Grad.

Es gibt im Prinzip zwei Möglichkeiten, wie die Verstellung des Winkelabstandes Δϕ der Hubbewegung in einer Schleifmaschine (Vorrichtung 20) erfolgen kann. Wenn die Exzentrizität fest in Bezug auf die Werkzeugspindel 42 einstellbar ist, dann würde bei dem Beispiel nach Fig. 4A die Werkzeugspindel 42 n=2 aktive Hubpunkte bei den Positionen 0 Grad und 180 Grad der Werkzeugspindel 42 vorgeben. Wenn die Schleifscheibe 24 rotationsfest mit der Werkzeugspindel 42 verbunden ist (z.B. durch das Positionierungselement 44, das in die Ausnehmung 26 eingreift), dann liegen die den Hubpunkten entsprechenden Berührpunkte P1.1 und P1.2 bei den Positionen 0 Grad und 180 Grad der Schleifscheibe 24, wie in Fig. 4A gezeigt. Wenn nun die Exzentrizität in der zweiten Bearbeitungsphase weiterhin fest in Bezug auf die Werkzeugspindel 42 bei den Positionen 0 Grad und 180 Grad der Werkzeugspindel 42 vorgeben ist (d.h. die aktiven Hubpunkte liegen weiterhin bei 0 Grad und 180 Grad), muss die Schleifscheibe 24 vor der zweiten Bearbeitungsphase in Bezug zur Werkzeugspindel 42 um den Winkelabstand Δϕ = 90 Grad verdreht werden. D.h. die Schleifscheibe 24 müsste von der Werkzeugspindel 42 getrennt, um 90 Grad verdreht und erneut befestigt werden. An der Werkzeugspindel 42 müsste z.B. eine weitere Ausnehmung 26 vorgesehen sein, um die Schleifscheibe 24 um 90 Grad verdreht an der Werkzeugspindel 42 einspannen zu können. Nach einer solchen 90 Grad Verdrehung fallen dann die aktiven Berührpunkte P2.1 und P2.2 der Schleifscheibe 24 mit den aktiven Hubpunkten der Werkzeugspindel 42 bei 0 Grad und 180 Grad zusammen.

Es liegt auf der Hand, dass dieser Ansatz aufwendig ist und sich nicht oder nur bedingt für eine automatisierte Vorrichtung 20 eignet. Ausserdem müsste in diesem Fall das Positionierungselement 44 und/oder der/die Ausnehmungen 26 so ausgelegt sein, dass eine schrittweise (z.B. gerasterte) Verdrehung und Befestigung der Schleifscheibe 24 an der Werkzeugspindel 42 möglich ist.

Daher wurde gemäss Erfindung ein Ansatz entwickelt, bei dem es nicht erforderlich ist die Schleifscheibe 24 von der Werkzeugspindel 42 zu trennen, um den Winkelabstand Δϕ zu verstellen.

Gemäss Erfindung wird die Exzenterbewegung so als zyklische Rotationsbewegung der Hauptrotation (auch Umlaufbewegung genannt) der Schleifscheibe 24 um die Rotationsachse R1 überlagert, dass es jeweils an genau vorgegebenen Winkelpositionen zur Berührung, d.h. zum Abtragen von Material kommt. Die zyklische Rotationsbewegung wird als Kreisbewegung um eine Exzenterachse betrachtet. Die Exzenterachse steht in Fig. 1A senkrecht auf der Zeichenebene und durchdringt den Punkt M2. Die Exzenterachse verläuft bei allen Ausführungsformen parallel zur Rotationsachse R1. Der Abstand e beträgt bei allen Ausführungsformen zwischen 0,05 und 1 mm. Besonders bevorzugt ist bei allen Ausführungsformen ein Abstand e zwischen 0,05 und 0,5 mm.

Gemäss Erfindung ist die Exzenterbewegung in Bezug auf die Schleifscheibe 24 quasi synchronisiert oder fixiert, d.h. die CNC-Steuerung 50 "weiβ" stets, wenn z.B. der Berührpunkt P1.1 der Schleifscheibe 24 sich in der oberen, raumfesten 12 Uhr Stellung befindet. Vorzugsweise werden bei konkreten Umsetzungen der Erfindung nur die beiden Drehzahlen und Winkelstellungen (Schleifscheibe, Exzenter) entsprechend dem Exzenterverhältnis EV synchronisiert, wobei eine Drehzahl die Führungsgröße ist. Die Drehzahlen und die Winkelstellung werden über Drehgeber abgegriffen. Soll ein der Offset von 1 nach 2 erreicht werden, so wird der Drehung des Exzenterantriebs ein Offset aufgesetzt und danach die Drehzahlen wieder konstant gehalten.

Bei dem in Fig. 4A gezeigten Beispiel, gibt die CNC-Steuerung 50 bei einer Ausführungsform der Erfindung z.B. dann ein Exzentersignal E1 aus, wenn sich der Berührpunkt P1.1 oder der Berührpunkt P1.2 der Schleifscheibe 24 in der oberen, raumfesten 12 Uhr Stellung befinden. Die Schleifscheibe 24 macht also EV=n=2 Exzenterbewegungen pro Vollumdrehung der Schleifscheibe 24. Bei dem in Fig. 4B gezeigten Beispiel, gibt die CNC-Steuerung 50 z.B. dann ein Exzentersignal E1 aus, wenn sich der Berührpunkt P2.1 oder der Berührpunkt P2.2 der Schleifscheibe 24 in der oberen, raumfesten 12 Uhr Stellung befinden. In diesen Momenten befindet sich der zuvor während der I. Phase aktive Berührpunkt P1.1 in der raumfesten 9 Uhr Stellung bzw. in der raumfesten 3 Uhr Stellung. In diesen Momenten befindet sich der zuvor während der I. Phase aktive Berührpunkt P1.2 in der raumfesten 3 Uhr Stellung bzw. in der raumfesten 9 Uhr Stellung. Der inaktive Berührpunkt P1.1 läuft dem jetzt aktiven Berührpunkt P2.1 um 90 Grad voraus und der inaktive Berührpunkt P1.2 läuft dem jetzt aktiven Berührpunkt P2.2 um 90 Grad hinterher. Die Schleifscheibe 24 macht in der II. Phase EV=m=2 Exzenterbewegungen pro Vollumdrehung der Schleifscheibe 24.

Vorzugsweise kann bei allen Ausführungsformen der Nullpunkt (d.h. die Nullstellung) auf einer (Winkel)Einteilung vorgegeben werden. Bei den in den Figuren 4A, 4B und folgende gezeigten Ausführungsbeispielen wurde der Nullpunkt stets auf die obere, raumfeste 12 Uhr Stellung festgelegt. Je nach Anwendung kann dieser Nullpunkt auch an jeder anderen Winkelposition liegen.

Idealerweise liegt der Nullpunkt bei allen Ausführungsformen an derjenigen Winkelposition, die durch das Ineinandergreifen korrespondierender Wirkmittel der Vorrichtung 20 festgelegt ist. Bei den Beispielen nach Fig. 2 und 9 dienen das Positionierungselement 44 und die Ausnehmung 26 als korrespondierende Wirkmittel.

Besonders bevorzugt sind Ausführungsformen, bei denen zwei CNC-kontrollierte Antriebe B1 und B3 zum Einsatz kommen, um die Rotation um die Rotationsachse R1 und die dazu synchronisierte Zusatzbewegung (Exzenterbewegung) zu erzeugen. Es ergeben sich die folgenden Konstellationen, die je nach der erforderlichen Genauigkeit, Bauform und Leistung der Vorrichtung 20 gewählt werden können:
a) es kommen zwei koaxial angeordnete Antriebe B1 und B3 zum Einsatz, die beide durch die CNC-Steuerung 50 kontrolliert werden. Jeder dieser Antriebe hat einen Winkeldecoder, die von der CNC-Steuerung 50 auslesbar sind oder die Signale über die aktuelle Winkelposition und/oder Drehzahl an die CNC-Steuerung 50 übermitteln. Vorzugsweise sind die beiden Antriebe B1 und B3 bei allen Ausführungsformen koaxial geschachtelt angeordnet. Da die beiden Antriebe B1 und B3 koaxial in oder an der Werkzeugspindel 42 angeordnet sind, hat diese Konstellation eine relativ grosse bewegte Masse, die beim Ausführen der Exzenterbewegung beschleunigt werden muss.
b) es kommen zwei Antriebe B1 und B3 zum Einsatz, die über Riemen 45, 46 mit einer Werkzeugspindel 42 verbunden sind, wie zum Beispiel in Fig. 10 dargestellt. Der Antrieb B1 treibt mittels des Riemens 46 eine Riemenscheibe 46.1 an, die mit einem Spindelkörper 42.1 verbunden ist. Der Antrieb B1 versetzt über den Riemen 46 die Riemenscheibe 46.1 und somit auch den Spindelkörper 42.1 in Rotation um die Rotationsachse R1. Der Antrieb B3 treibt mittels des Riemens 45 eine Riemenscheibe 45.1 an, die mit einer exzentrischen Buchse 47 verbunden ist. Es ist ein Vorteil der Konstellation mit zwei Riemen 45, 46, dass die Werkzeugspindel 42 beweglich in der Vorrichtung 20 gelagert werden kann und dass die Riemen 45, 46 die kleinen Exzenterbewegungen ausgleichen.

Die Konstellationen nach a) und b) können wie folgt kombiniert werden.
c) Entweder sitzt der Exzenterantrieb B3 direkt an der Werkzeugspindel 42 und der Antrieb B1 wird (analog zu Fig. 10) über einen Riemen 46 und eine Riemenscheibe 46.1 mit dem Spindelkörper 42.1 antriebstechnisch verbunden. Der Exzenterantrieb B3 kann direkt antriebstechnisch mit einer exzentrischen Buchse 47 verbunden sein.
d) Oder der Antrieb B1 sitzt direkt an der Werkzeugspindel 42 und der Exzenterantrieb B3 wird (analog zu Fig. 10) über einen Riemen 45 und eine Riemenscheibe 45.1 mit der exzentrischen Buchse 47 antriebstechnisch verbunden.

In jedem Fall werden die Antriebe B1, B3 durch die CNC-Steuerung 50 kontrolliert, um durch ein zeitliches Zusammenwirken die erwünschte Überlagerung der Rotationsbewegung um die Rotationsachse R1 und der Exzenterbewegung zu bewirken.

Vorzugsweise wird das zeitliche Zusammenwirken der Antriebe B1, B3 bei allen Ausführungsformen so durch die CNC-Steuerung 50 bewerkstelligt, dass die Drehzahlen n1 und n3 und die relative Winkellage vorgegeben und gesteuert (kontrolliert) werden. n1 ist die Hauptdrehzahl und n3 ist die Drehzahl der Exzentrizität. Alternativ zu den Drehzahlen n1 und n3 kann auch das Drehzahlverhältnis DV= n3/n1 angegeben werden.

Konkret bedeutet das, dass z.B. die Werkzeugspindel 42, respektive der Spindelkörper 42.1 samt Werkzeugadapter 42.2, eine Rotationsbewegung um die Rotationsachse R1 mit der Hauptdrehzahl n1 ausführt. Es gilt *ω*1=2*πn*1. Wenn nun die Drehzahl n3 des Antriebes B3 zu n3=n1 (DV=1=EV) eingestellt wird, dann ergibt sich aufgrund der exzentrischen Lagerung des Spindelkörpers 42.1 in der exzentrischen Buchse 47 ein Exzenterhub pro Vollumdrehung der Werkzeugspindel 42 respektive der daran eingespannten Schleifscheibe 24. Wenn nun die Drehzahl n3 des Antriebes B3 zu n3=2*n1 (DV=2=EV) eingestellt wird, dann ergeben sich zwei Exzenterhübe pro Vollumdrehung. Das Drehzahlverhältnis DV entspricht dem Exzenterverhältnis EV und gibt die Anzahl der Exzenterhübe pro Vollumdrehung an.

Die relative Winkellage muss vorgegeben werden oder eingestellt sein, um sicher zu stellen, dass die Exzenterhübe stets in Bezug zur eingespannten Schleifscheibe 24 an den gewünschten Stellen erfolgen. In Bezug auf die stark schematisierte Darstellungen A1 - A7 der Fig. 8 bedeutet das z.B., dass der Exzenterhub erfolgen muss, wenn der Berührpunkt P1.1 und P1.2 der Schleifscheibe 24 die raumfeste 12 Uhr Stellung erreichen. Fig. 8 zeigt, wie auch die Figuren 4A und 4B, nur die durch einen Kreis dargestellte Aussenfläche 28.1 der Schleifscheibe 24. Ausserdem ist zu beachten, dass die Darstellung der Fig. 8 bewusst vereinfacht wurde, in dem die kreisförmig Exzenterbewegung durch eine einfache Auf- und Abbewegung ersetzt wurde. In der Realität würde der gezeigte Kreis 28.1 eine leichte Kreisbewegung ausführen, wie im Zusammenhang mit Fig. 1A erläutert.

Es werden hier auch nur die Berührpunkte der Aussenfläche 28.1 betrachtet. Die Drehzahl n3 des Antriebes B3 wird zu n3=2n1 (DV=2=EV) eingestellt, damit sich zwei Exzenterhübe pro Vollumdrehung ergeben. Ausserdem wird die relative Winkellage in diesem Beispiel so vorgegeben, dass die Exzenterhübe bei der raumfesten 12 Uhr Stellung erfolgen.

In Fig. 8 ist der maximale Hub H eingezeichnet, der als Mass für die Verlagerung der Berührpunkte, respektive des Aussenumfangs, bzw. der Aussenfläche 28.1 der Schleifscheibe 24 angesehen werden kann. Der Hub H muss nicht zwingend mit dem Abstand e identisch sein. Wenn die Exzenterhübe durch eine kreisförmige Parallelverschiebung/-bewegung der Rotationsachse R1 erzielt werden, dann entspricht H = e.

Vorzugsweise wird bei allen Ausführungsformen die Schleifscheibe 24 (virtuell oder wirklich) in Winkelabschnitte unterteilt. Diese Abschnitte könnten auch unterschiedlich beschaffen sein. So kann die Schleifscheibe 24 zum Beispiel Abschnitte aufweisen, die Material mit hoher Abtragsrate zum Schruppen aufweisen. Andere Abschnitte der Schleifscheibe 24 können z.B. mit Material zum Erzielen von Oberflächen mit hoher Oberflächengüte belegt sein. Beim Unterteilen in Winkelabschnitte wird berücksichtigt, dass ein Berührpunkt in der Praxis ein Kreisbogensegment (d.h. ein Berührbereich) ist, das mit dem Material des Werkstücks 31 in Kontakt kommt. Reine Punktberührungen sind nur theoretisch möglich.

Um so grösser der Durchmesser der Schleifscheibe 24 ist und um so weiter die Berührpunkte und die damit festgelegten Kreisbogensegmente (Berührbereiche) von der Rotationsachse R1 entfernt sind, um so mehr Kreisbogensegmente kann man auf dem ringförmigen 360 Grad Vollumfang (U1 = 2*πr*1) anordnen. Dieses Prinzip wird anhand der Fig. 5 näher erläutert. In Fig. 5 ist eine Ansicht der Topfseite einer Schleifscheibe 24 gezeigt. Die Schleifscheibe 24 hat einen Aussendurchmesser, der 2*r beträgt. Der Innendurchmesser des Profils 28 beträgt 2*r1 und wird durch einen Kreis K1 dargestellt. In Fig. 5 sind sowohl die Aussenfläche 28.1, die Innenfläche 28.2 und der Kopffläche 28.3 des Profils 28 zu erkennen. Von Aussen nach Innen betrachtet liegen die Aussenfläche 28.1, die Kopffläche 28.3 und die Innenfläche 28.2. Die Kopffläche 28.3 liegt hier in der Zeichenebene und die Aussenfläche 28.1 sowie die Innenfläche 28.2 stehen schräg (konisch).

Gezeigt sind in Fig. 5 Berührpunkte P1.1 und P1.2, die alle auf dem Kreis K1 liegen, mit einem Radius r1, der kleiner ist als der Radius r. Es wird angenommen, dass die Schleifscheibe 24 zum Einflankenschnitt der konvexen Zahnflanken 5.2 eines Werkstücks 31 ausgelegt ist.

Fig. 5 kann man auch entnehmen, dass der Winkelabstand zweier benachbarter Berührpunkte P1.1, P1.2 dem Betrag des Winkels ϕ1 entspricht, der der Kreisbogenlänge s1 zugeordnet ist, falls die Kreisbogensegmente S1 und S2 nahtlos aneinander anschließen und falls die Kreisbogensegmente S1 und S2 jeweils gleich lang sind.

Ausserdem muss eine Periodizität beim Festlegen der Berührpunkte, respektive der zugehörigen Winkelpositionen eingehalten werden, da die Exzenterbewegung eine zyklische Bewegung ist. Nur wenn die Periodizität bezogen auf eine Vollumdrehung gegeben ist, kann gewährleistet werden, dass man auch nach mehreren Umdrehungen immer wieder die selben Positionen der Schleifscheibe 24 als Berührpunkte trifft.

Die Vorrichtung 20 ist nun vorzugsweise bei allen Ausführungsformen so ausgelegt, dass man bei der Festlegung der Berührpunkte wie folgt vorgeht. Aus den Prozessparametern ergibt sich eine erforderliche Kreisbogenlänge s1 des Kreisbogensegments S1, z.B. s1 = 1 cm. Der Durchmesser oder Radius r1 des Kreises K1 ist bekannt (vom Werkzeug 24 vorgegeben). Ausserdem kennt man die Winkelauflösung Δϕmin der Vorrichtung 20. Hier wird angenommen, dass die Winkelauflösung Δϕmin = 1 Grad beträgt. Theoretisch könnte man bei der genannten Winkelauflösung 360 Berührpunkte auf einem Vollkreis unterbringen. Mit der vorgegebenen Länge s1 = 1 cm müsste der Umfang U1 des Kreises K1 mindestens 360 cm betragen, um 360 mal 1 cm lange Kreisbogensegmente unterzubringen. Der Radius r1 eines solchen Kreises K1 würde 57,3 cm betragen.

Anhand von entsprechenden Kreisbogen- und Winkelberechnungen kann man eine Unterteilung einer gegebenen Schleifscheibe 24 in eine geeignete Anzahl von Kreisbogensegmenten vornehmen. Wenn man z.B. 36 Kreisbogensegmente mit je einer Kreisbogenlänge s1 von 2 cm (d.h. die erforderliche Mindestkreisbogenlänge ist s1 = 2 cm) auf einer Schleifscheibe unterbringen will, braucht der Kreis K1 einen Radius r1 von mindestens 11,46 cm. Nimmt man nun z.B. einen Radius r1 = 12 cm, um die 36 Kreisbogensegmente á 2 cm unterzubringen, ergibt sich eine effektive Kreisbogenlänge von 2,09 cm. Diese effektive Kreisbogenlänge von 2,09 cm ist grösser als die geforderte Kreisbogenlänge von 2 cm. Damit ist das Merkmal erfüllt, dass die Kreisbogenlänge mindestens 2 cm betragen muss. Wenn die Vorrichtung 20 eine Winkelauflösung von 1 Grad hat, dann muss nun geprüft werden, ob die Unterteilung des Vollkreises in 36 Kreisbogensegmente möglich ist. Jedes der 36 Kreisbogensegmente deckt einen Winkel ϕ1 von 10 Grad ab. Der Winkel ϕ1 kann durch die Winkelauflösung von 1 Grad ganzzahlig geteilt werden. Das bedeutet, dass man die zentralen Berührpunkte der 36 Kreisbogensegmente genau und periodisch wiederholbar einstellen und anfahren kann.

Besonders geeignet ist eine Unterteilung eines Schleifwerkzeugs 24 in 4, 5, 6, 8, 9, 10, 12, 15, 18, 20, 24, 30, 36, 40 usw., wenn eine Winkelauflösung Δϕmin von 1 Grad vorgegeben ist. In der Praxis gibt es in den meisten Fällen eher weniger Unterteilungen als oben beispielhaft aufgeführt.

Wenn eine Winkelauflösung Δϕmin von 0,5 Grad vorgegeben ist, kommen weitere Zahlen wie z.B. die 16 hinzu, um ein zusätzliches Beispiel zu geben.

Gemäss Erfindung muss der Winkelabstand Δϕ ≥ Δϕmin sein. Ausserdem sollten die Zahlen n und m ganze Zahlen grösser 2 sein und die gewählte Zahl n oder m sollte multipliziert mit dem Δϕmin den Wert 360 Grad oder einen ganzzahligen Teiler von 360 Grad ergeben. Ausserdem sollte stets gewährleistet werden, dass die effektive errechnete Länge der Kreisbogensegmente grösser ist als die aufgrund von Prozessparametern geforderte Mindestkreisbogenlänge s1. Wenn diese letzte Bedingung erfüllt wird, hat man stets einen kleinen Winkelabstand als Sicherheitsabstand oder -reserve zwischen benachbarten Kreisbogensegmenten.

Es ist jedoch auch möglich eine Marge in die aufgrund von Prozessparametern geforderte Mindestkreisbogenlänge s1 einzubeziehen, um so für einen ausreichenden räumlichen (Winkel-)Abstand zu sorgen. Wenn also die geforderte Mindestkreisbogenlänge s1 z.B. 1,5 cm beträgt, kann man diesen Wert z.B. auf 2 cm aufrunden. Wenn man die oben beschriebenen Berechnungen mit den Wert von z.B. 2 cm durchführt, kommt man stets auf einen gegenseitigen Winkelabstand von benachbarten Kreisbogensegmenten bzw. Berührpunkten, der genügend Sicherheitsabstand oder -reserve bietet.

Vorzugsweise wird die Schleifscheibe 24 bei allen Ausführungsformen in eine ganzzahlige Anzahl Kreisbogensegmente S1, S2 usw. der Aussenfläche 28.1 und/oder der Innenfläche 28.2 unterteilt und die CNC-Steuerung 50 steuert die Exzenterbewegung so, dass alle Berührpunkte P1.1, P1.2, P2.1, P2.2 jeweils innerhalb der Kreisbogensegmente S1, S2 an maschinenseitig vorgebbaren (im Sinne von einstellbaren und anfahrbaren) Winkelpositionen liegen. Die maschinenseitig vorgebbaren Winkelpositionen hängen dabei von der systemseitigen Winkelauflösung Δϕmin ab. Die maschinenseitig vorgebbaren Winkelpositionen müssen ganzzahlig durch die Winkelauflösung Δϕmin teilbar sein.

Fig. 6 zeigt beispielhaft eine Schleifscheibe 24, deren Innenfläche 28.2 in sechs Kreisbogensegmente S1 - S6 unterteilt ist. Die Kreisbogensegmente S1 - S6 sind als fette Kreisbögen des Kreises K1 mit dem Radius r1 eingezeichnet. Sie sind äquidistant über den Vollkreis verteilt. In der Winkelmitte eines jeden Kreisbogensegments S1 - S6 sitzt ein Berührpunkt P1.1 bis P3.2. Jedes Kreisbogensegment hat eine Kreisbogenlänge s1, die etwas kürzer ist als der Vollumfang von 360 Grad geteilt durch die Anzahl der Kreisbogensegmente. Dadurch ergeben sich zwischen den sechs Kreisbogensegmenten S1 - S6 Zwischenräume, die hier schraffiert dargestellt sind. Das bedeutet, dass die sechs Kreisbogensegmente S1 - S6 nicht überlappen oder ineinander laufen, sondern durch einige Winkelgrade gegeneinander verdreht sind.

Diese Schleifscheibe 24 nach Fig. 6 kann z.B. in einer Maschine 20 der Erfindung wie folgt eingesetzt werden. Im Folgenden wird von einem Einflankenschnitt ausgegangen, bei dem nur die umlaufende Innenfläche 28.2 der Schleifscheibe 24 zum Einsatz kommt. In einer ersten Bearbeitungsphase (I. Phase) können z.B. die Berührpunkte P1.1 und P1.2 jeweils Kontakt mit dem Material des Werkstücks 31 herstellen. Es gilt hier n = 2, was bedeutet, dass es pro Vollumdrehung der Schleifscheibe 24 zu zwei Berührungen an der Innenfläche 28.2 kommt. In einer zweiten Bearbeitungsphase (II. Phase) können z.B. die Berührpunkte P2.1 und P2.2 jeweils Kontakt mit dem Material des Werkstücks 31 herstellen. Es gilt hier m = 2. In noch einer weiteren Bearbeitungsphase können z.B. die Berührpunkte P3.1 und P3.2 jeweils Kontakt mit dem Material des Werkstücks 31 herstellen. Es gilt hier k = 2.

Die Erfindung lässt eine Erweiterung zu, da quasi virtuell eine Unterteilung/Segmentierung der Schleifscheibe 24 erfolgt. Diese Unterteilung erfolgt gemäss Erfindung so, dass die Berührpunkte innerhalb der Segmente wiederholt winkelgenau angefahren werden können. Die virtuelle Unterteilung/Segmentierung der Schleifscheibe 24 ermöglicht eine physische Trennung von Kreissegmenten der abrasiven Aussenfläche 28.1 und/oder Innenfläche 28.2 der Schleifscheibe 24 z.B. in Schruppbereiche und Schlichtbereiche.

Das in Fig. 6 gezeigte Prinzip kann somit wie folgt weiter entwickelt werden. Da bei der Schruppbearbeitung mehr Material am Werkstück 31 abzutragen ist, wird im gezeigten Beispiel der Schruppbearbeitung ein grösserer Flächenbereich der Schleifscheibe 24 zugeordnet. In Fig. 7 ist ein entsprechendes Beispiel eines Schleifwerkzeugs 24 gezeigt, wobei in der schematisierten Darstellung vom Zahnprofil 28 der Schleifscheibe 24 nur der Kreis K1 mit dem Radius r1 gezeigt ist. Die Schleifscheibe 24 hat zwei grosse Kreissegmente etwa zwischen 7 Uhr und 11 Uhr sowie zwischen 2 Uhr und 5 Uhr. Die entsprechenden Kreisbogensegmente sind mit S1, S2, S3 und S4 bezeichnet. Jedem dieser Kreisbogensegmente S1 - S4 ist ein Berührpunkt P1.1 bis P1.4 zugeordnet. Die Kreisbogensegmente S1 - S4 sind hier durch eine fette punktierte Kurve dargestellt, weil diese Kreisbogensegmente S1 - S4 der Schleifscheibe 24 zur Schruppbearbeitung ausgelegt sind, d.h. die entsprechende Abschnitt der Aussenfläche 28.1 und/oder Innenfläche 28.2 sind zum Schruppen ausgelegt. Die beiden verbleibenden Kreisbogensegmente S5 und S6 sind durch entsprechende fett durchgezogene Kurven dargestellt. Die beiden Berührpunkt P2.1 und P2.2 sind diesen beiden Kreisbogensegmenten S5 und S6 zugeordnet. Die Kreisbogensegmente S5 und S6 werden zur Schlichtbearbeitung eingesetzt, d.h. die entsprechenden Abschnitte der Aussenfläche 28.1 und/oder Innenfläche 28.2 sind zum Schlichten ausgelegt. Die Kreisbogensegmente S5 und S6, respektive die Abschnitte der Aussenfläche 28.1 und/oder Innenfläche 28.2 können für die Schlichtbearbeitung mit einer anderen Körnung belegt sein als die Kreisbogensegmente S1 - S4 oder die entsprechenden Abschnitte. Die schraffierten Segmente zwischen den erwähnten Segmenten dienen als Sicherheitsabstand oder -reserve, wie bereits beschrieben.

Es sei hier angemerkt, dass die schraffierten Segmente der Schleifscheibe 24 nicht physisch am Werkzeug vorhanden sein müssen. Es handelt sich hier eher um virtuelle Zwischen- oder Übergangssegmente. Vorzugsweise sind die Zwischen- oder Übergangssegmente der Schleifscheibe 24 aller Ausführungsformen nicht sichtbar. Bei Bedarf können die Zwischen- oder Übergangssegmente aber an der Schleifscheibe 24 (z.B. farblich) gekennzeichnet sein.

Die Schleifscheibe 24 nach Fig. 7 kann z.B. wie folgt eingesetzt werden. In einer ersten Phase (I. Phase) wird ein Werkstück 31 mit den Berührpunkten P1.1 und P1.2 einer Schruppbearbeitung unterzogen (es gilt hier n = 2). Nach der Schruppbearbeitung können die geschruppten Zahnflanken des Werkstücks 31 einer Schlichtbearbeitung unterzogen werden. Beim Schlichten kommen die Berührpunkte P2.1 und P2.2 zum Einsatz. In einem weiteren Schritt (z.B. wieder in einer ersten Phase an einem anderen Werkstück 31), wird dieses weitere Werkstück 31 mit den Berührpunkten P1.3 und P1.4 einer Schruppbearbeitung unterzogen (es gilt hier k = 2). Nach der Schruppbearbeitung dieses weiteren Werkstücks 31 können die geschruppten Zahnflanken einer Schlichtbearbeitung unterzogen werden. Beim Schlichten kommen wieder dieselben Berührpunkte P2.1 und P2.2 zum Einsatz wie zuvor.

Fig. 8 zeigt eine stark schematisierte Reihe von Momentansichten A1 bis A7 einer Schleifscheibe 24, die exzentrisch gelagert ist und gemäss Erfindung zwei Berührpunkte P1.1 und P1.2 an der Aussenfläche 28.1 aufweist (EV=2). Die kreisförmige Exzenterbewegung ist hier in Fig. 8 vereinfachend durch eine lineare Auf- und Abbewegung dargestellt. Eine gestrichelte Linie L zeigt die Normalposition der Oberkante (am äußersten Umfang) der Schleifscheibe 24. Das zu bearbeitende Werkstück 31 ist in Fig. 8 bewusst nicht gezeigt. Die Schleifscheibe 24 dreht sich im Gegenuhrzeigersinn, wie in der Momentansicht A1 durch den Pfeil ω1 angedeutet. Die Momentansicht A1 zeigt eine Situation in der die beiden Berührpunkte P1.1 und P1.2 der Schleifscheibe 24 in einem raumfesten Koordinatensystem bei 3 Uhr und 9 Uhr liegen. Nun dreht sich die Schleifscheibe 24 um -45 Grad, um die Position zu erreichen, die in Momentansicht A2 gezeigt ist. Nun dreht sich die Schleifscheibe 24 um weitere - 45 Grad, um die Position zu erreichen, die in Momentansicht A3 gezeigt ist. In dem Moment, wo der Berührpunkt P1.1 die 12 Uhr Stellung erreicht, macht die Werkzeugspindel 42 solidarisch mit der Schleifscheibe 24 eine Hubbewegung (auch Exzenterbewegung genannt). Durch die hier vereinfacht dargestellte lineare Hubbewegung verlagert sich die Schleifscheibe 24 temporär um einen Hub H nach oben. Ein Teil der Schleifscheibe 24 liegt nun in der Momentansicht A3 oberhalb der Linie L. Nach einer weiteren -45 Grad Drehung erreicht die Schleifscheibe 24 die Position, die in der Momentansicht A4 gezeigt ist. Sie liegt nun spätestens beim Erreichen der in der Momentansicht A4 gezeigten Position wieder unter der Linie L. Die Schleifscheibe 24 dreht sich entsprechend weiter und erreicht die Positionen, die in den Momentansichten A5 und A6 gezeigt sind. In dem Moment, wo der Berührpunkt P1.2 die 12 Uhr Stellung erreicht, macht die Werkzeugspindel 42 erneut solidarisch mit der Schleifscheibe 24 eine Hubbewegung (auch Exzenterbewegung genannt). Durch die Hubbewegung verlagert sich die Schleifscheibe 24 temporär um einen Hub H nach oben. Ein Teil der Schleifscheibe 24 liegt nun in der Momentansicht A7 oberhalb der Linie L. Dieser beispielhafte Ablauf wiederholt sich so oder in anderer Form bei allen Ausführungsformen periodisch, d.h. zyklisch (regelmäßig wiederkehrend).

Fig. 9 zeigt eine schematisierte Seitenansicht einer Schleifscheibe 24 in Form einer Topfschleifscheibe, die exzentrisch gelagert ist und gemäss Erfindung mehrere Berührpunkte an der Aussenfläche 28.1 und/oder an der Innenfläche 28.2 (nicht in Fig. 9 sichtbar) aufweist. In der Seitenansicht sind zwei der Berührpunkte P1.1 und P2.1 der Aussenfläche 28.1 sichtbar. Der Berührpunkt P1.1 ist in der gezeigten Bearbeitungsphase aktiv und ist daher als schwarz gefüllter Kreis dargestellt (wie auch in Fig. 4A). Der Berührpunkte P2.1 ist in der gezeigten Bearbeitungsphase inaktiv und ist daher als nicht gefülltes Dreieck dargestellt.

Fig. 10 zeigt eine schematisierte Schnittansicht einer beispielhaften Werkzeugspindel 42 der Erfindung, die über zwei Riemen 45, 46 und Riemenscheiben 45.1, 46.1 angetrieben werden kann. Von Innen nach Aussen betrachtet kann eine solche Werkzeugspindel 42 einen Spindelkörper 42.1 umfassen, der hier eine durchgängige Zentralbohrung 48 aufweist. Der Spindelkörper 42.1 wird durch die Riemenscheibe 46.1 und den Riemen 46 um die Rotationsachse R1 in Rotation versetzt. Der Spindelkörper 42.1 ist mittels Spindellagern 49.1 in einer exzentrischen Buchse 47 gelagert. Die exzentrische Buchse 47 wiederum ist mittels Exzenterlagern 49.2 in einem äusseren Spindelkörper 41 gelagert. Der äussere Spindelkörper 41 wird durch die Riemenscheibe 45.1 und den Riemen 45 in eine zyklische Rotationsbewegung um die virtuelle Rotationsachse der exzentrisch gelagerten Buchse 47 versetzt. Diese beiden Rotationsbewegungen überlagern sich und ergeben die gewünschten periodischen Hubbewegungen des Spindelkörpers 42.1 samt des daran befestigten Schleifwerkzeugs 24, das in Fig. 10 nur schemenhaft gezeigt ist.

Vorzugsweise kommt die Erfindung beim diskontinuierlichen (Tauch-) Schleifen von Kegelrädern und insbesondere von (spiralverzahnten) Tellerrädern zum Einsatz. Alle Ausführungsformen lassen sich zu diesem bevorzugten Zweck einsetzen.

Je nach Situation und Ausführungsform kann entweder die Bedingung n ≠ m oder die Bedingung n = m gelten.

### Bezugszeichen:

- Tellerrad: 1
- Schleifwerkzeug / Schleiftopf: 2
- Wagurischeibe: 3
- Bereich: 4
- Zahnflanke: 5
- Konkave Zahnflanke: 5.1
- Konvexe Zahnflanke: 5.2
- Zahn: 6
- Profil: 8
- Aussenumfang: 8.1
- Innenumfang: 8.2

- Vorrichtung: 20
- Werkstückspindel: 21

- Schleifscheibe / Topfschleifscheibe: 24
- Ausnehmung: 26
- Bereich / Profil: 28
- umlaufende Aussenfläche: 28.1
- umlaufende Innenfläche: 28.2
- Kopffläche: 28.3

- Kegelradwerkstück: 31
- Tellerrad: 31.1
- Ritzel: 31.2
- Zähne: 32, 33

- korrespondierende Wirkmittel: 40
- äußerer Spindelkörper: 41
- Werkzeugspindel: 42
- Spindelkörper: 42.1
- Werkzeugadapter: 42.2
- Positionierungselement: 44
- Riemen: 45
- Riemenscheibe: 45.1
- Riemen: 46
- Riemenscheibe: 46.1
- exzentrische Buchse: 47
- Zentralbohrung: 48
- Spindellager: 49.1
- Exzenterlager: 50

- CNC-Steuerung: 50

- Momentansichten: A1 bis A7
- Erster Antriebsmotor: B1
- zweiter Antriebsmotor: B2
- dritter Antriebsmotor: B3
- Winkelabstand: Δϕ
- Winkelauflösung: Δϕmin
- Drehzahlverhältnis: DV
- Abstand: e
- Exzenterbewegung: E
- Exzentersignal: E1
- Exzenterverhältnis: EV
- Hub: H
- steuerungstechnische Verbindung: I1, I2
- Zahl von Berührpunkten: k
- Kreis: K1
- Zahl von Berührpunkten: k
- Linie: L
- Zahl von Berührpunkten: m
- Scheibenmittelpunkt: M1
- Mittelpunkt: M2
- Zahl von Berührpunkten: n
- (Haupt)Drehzahl: n1
- Drehzahl der Exzentrizität: n3
- Berührpunkte: P1.1, P1.1, P1.3, P1.4, P2.1, P2.2; P3.1, P3.2
- rationale Zahl: 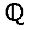
- Radius: r
- Radius: r1
- Rotationsachse: R1
- Werkstück-Rotationsachse: R2
- Kreisbogenlänge: s1
- Kreisbogensegment: S1, S2, S3, S4, S5, S6
- Schnittgeschwindigkeit: v1
- Vollumfang: U1
- Winkelgeschwindigkeit: ω1
- Antriebe: X, Y, Z, B, C, A1
- Schnitt: X1 - X1

## Patentansprüche

1. Vorrichtung (20) mit einer Werkstückspindel (21) zur Aufnahme eines Kegelradwerkstücks (31), einer Werkzeugspindel (42) zur Aufnahme einer mit abrasiver Oberfläche (28.1, 28.2) versehenen Schleifscheibe (24) und mit mehreren Antrieben (B1, B2, B3) und eine CNC-Steuerung (50) zum CNC-gesteuerten Bearbeiten des Kegelradwerkstücks (31), wobei die Schleifscheibe (24) beim Bearbeiten des Kegelradwerkstücks (31) eine Rotation um die Rotationsachse (R1) der Werkzeugspindel (42) ausführt und die Schleifscheibe (24) in das Kegelradwerkstück (31) eingreift, um Material abzutragen, und wobei der Rotation um die Rotationsachse (R1) der Werkzeugspindel (42) eine Exzenterbewegung (E) überlagert ist, damit die Schleifscheibe (24) nur mit n Berührbereichen (P1.1, P1.2) eines Vollkreises (K1) der abrasiven Oberfläche (28.1, 28.2) in das Kegelradwerkstück (31) eingreift, **dadurch gekennzeichnet, dass** die CNC-Steuerung (50) der Vorrichtung (20) dazu ausgelegt ist, die Exzenterbewegung (E) so zu verstellen, um nach einer ersten Bearbeitungsphase (I) im Rahmen einer weiteren Bearbeitungsphase (II) m Berührbereiche (P2.1, P2.2) des Vollkreises (K1) der abrasiven Oberfläche (28.1, 28.2) vorzugeben, wobei die m Berührbereiche (P2.1, P2.2) von den n Berührbereichen (P1.1, P1.2) räumlich beabstandet sind.

2. Vorrichtung (20) nach Anspruch 1, **dadurch gekennzeichnet, dass** die m Berührbereiche (P2.1, P2.2) gegenüber den n Berührbereichen (P1.1, P1.2) durch eine Winkelverdrehung mit einem Winkelabstand (Δϕ) beanstandet sind, damit sie nicht überlappen, wobei vorzugsweise m gleich n ist.

3. Vorrichtung (20) nach Anspruch 1 oder 2, **dadurch gekennzeichnet, dass** die Vorrichtung (20) eine Exzenter-Werkzeugspindel (42) umfasst, deren Hubpunkte in Bezug zu der Schleifscheibe (24) vorgebbar sind.

4. Vorrichtung (20) nach Anspruch 1 oder 2, **dadurch gekennzeichnet, dass** die CNC-Steuerung (50) so konfiguriert ist, um es zu ermöglichen, einen Abstand, vorzugsweise einen Winkelabstand (Δϕ) vorzugeben, wobei nach der ersten Bearbeitungsphase (I) die Schleifscheibe (24) durch die CNC-Steuerung (50) um diesen Abstand verdrehbar ist, bevor die weitere Bearbeitungsphase (II) beginnt.

5. Vorrichtung (20) nach einem der Ansprüche 1 bis 4, **dadurch gekennzeichnet, dass** folgende Bedingung gilt: n ≠ m.

6. Vorrichtung (20) nach einem der Ansprüche 1 bis 4, **dadurch gekennzeichnet, dass** die Schleifscheibe (24) steuerungsseitig in eine ganzzahlige Anzahl Kreisbogensegmente (S1, S2, S3, S4, S5, S6) unterteilt ist und die CNC-Steuerung (50) die Exzenterbewegung (E) so steuert, dass alle Berührbereiche (P1.1, P1.2, P2.1, P2.2) jeweils innerhalb der Kreisbogensegmente (S1, S2, S3, S4, S5, S6) an maschinenseitig vorgebbaren Winkelpositionen liegen.

7. Vorrichtung (20) nach einem der Ansprüche 1 bis 4 oder 6, **dadurch gekennzeichnet, dass** die Schleifscheibe (24) in eine Anzahl Kreisbogensegmente (S1, S2, S3, S4, S5, S6) unterteilt ist, wobei mindestens eines dieses Kreisbogensegmente (S1, S2, S3, S4) speziell für eine Schruppbearbeitung und mindestens ein anderes dieser Kreisbogensegmente (S1, S2) speziell für eine Schlichtbearbeitung ausgelegt sind.

8. Vorrichtung (20) nach einem der Ansprüche 1 bis 7, **dadurch gekennzeichnet, dass** die Werkzeugspindel (42) mit zwei Antrieben (B1, B3) mechanisch verbunden ist, die koaxial zueinander an der Rotationsachse (R1) angeordnet sind.

9. Vorrichtung (20) nach einem der Ansprüche 1 bis 7, **dadurch gekennzeichnet, dass** die Werkzeugspindel (42) mit zwei Antrieben (B1, B3) mechanisch über Riemen (45, 46) verbunden ist.

10. Vorrichtung (20) nach einem der Ansprüche 1 bis 7, **dadurch gekennzeichnet, dass** die CNC-Steuerung (50) dazu programmiert ist, die Drehzahlen (n1, n3) und/oder ein Drehzahlverhältnis (DV) der Rotation der Werkzeugspindel (42) um die Rotationsachse (R1) und der Exzenterbewegung (E) vorzugeben.

11. Vorrichtung (20) nach einem der Ansprüche 1 bis 7, **dadurch gekennzeichnet, dass** die CNC-Steuerung (50) dazu programmiert ist, die relative Winkelposition der Werkzeugspindel (42) und einer Exzenterlagerung (E) vorzugeben.

12. Verfahren zum Bearbeiten von Kegelradwerkstücken mit einer Schleifscheibe (24) mit abrasiver Oberfläche (28.1, 28.2), mit den folgenden Schritten:
- Bereitstellen der Schleifscheibe (24) an einer Werkzeugspindel (42),
- Rotieren der Schleifscheibe (24) um eine Rotationsachse (R1) der Werkzeugspindel (42),
- Bereitstellen eines ersten Kegelradwerkstücks (31) an einer Werkstückspindel (21),
- CNC-gesteuertes Ausführen einer ersten Schleifbearbeitung des ersten Kegelradwerkstücks (31) unter Einsatz der Schleifscheibe (24), wobei dem Rotieren der Schleifscheibe (24) eine Exzenterbewegung (E) so überlagert ist, dass die abrasive Oberfläche (28.1, 28.2) nur an n Berührbereichen (P1.1, P1.2) eines Vollkreises (K1) in das Material des ersten Kegelradwerkstücks (31) eingreift, **gekennzeichnet durch** die folgenden Schritte:
- CNC-gesteuertes Ausführen einer zweiten Schleifbearbeitung entweder des ersten Kegelradwerkstücks (31) oder eines weiteren Kegelradwerkstücks unter Einsatz der Schleifscheibe (24), wobei dem Rotieren der Schleifscheibe (24) eine Exzenterbewegung (E) so überlagert ist, dass die abrasive Oberfläche (28.1, 28.2) nur an m Berührpunkten (P2.1, P2.2) des Vollkreises (K1) in das Material des ersten Kegelradwerkstücks (31) oder des weiteren Kegelradwerkstücks eingreift, wobei die m Berührpunkte (P2.1, P2.2) von den n Berührpunkten (P1.1, P1.2) räumlich beabstandet sind.

13. Verfahren nach Anspruch 12, **dadurch gekennzeichnet, dass** die erste Schleifbearbeitung eine Schruppbearbeitung und die zweite Schleifbearbeitung eine Schlichtbearbeitung ist.

14. Verfahren nach Anspruch 12 oder 13, **dadurch gekennzeichnet, dass** das Verfahren in einer Schleifmaschine (20) mit CNC-Steuerung (50) ausgeführt wird, wobei die CNC-Steuerung (50) mindestens die Möglichkeit bereit stellt,
- die Anzahl n der Berührbereiche (P1.1, P1.2), und/oder
- die Anzahl m der Berührbereiche (P2.1, P2.2), und/oder
- eine Anzahl von Kreissegmenten (S1 - S6) der Schleifscheibe (24), und/oder
- eine Mindestkreisbogenlänge (s1) von Kreissegmenten (S1 - S6) der Schleifscheibe (24), und/oder
- einen Mindestabstand zwischen benachbarten Kreissegmenten (S1 - S6) der Schleifscheibe (24) festzulegen oder auszuwählen.

15. Verfahren nach Anspruch 12 oder 13, **dadurch gekennzeichnet, dass** das Verfahren in einer Schleifmaschine (20) mit CNC-Steuerung (50) ausgeführt wird, wobei die CNC-Steuerung (50) mindestens die Möglichkeit bereit stellt die Drehzahlen (n1, n3) und/oder ein Drehzahlverhältnis (DV) der Rotation der Werkzeugspindel (42) um die Rotationsachse (R1) und der Exzenterbewegung (E) vorzugeben.

16. Verfahren nach Anspruch 12 oder 13, **dadurch gekennzeichnet, dass** das Verfahren in einer Schleifmaschine (20) mit CNC-Steuerung (50) ausgeführt wird, wobei die CNC-Steuerung (50) mindestens die Möglichkeit bereit stellt, die relative Winkelposition der Werkzeugspindel (42) und einer Exzenterlagerung vorzugeben.

17. CNC-Steuerung (50) zum Einsatz in einer Vorrichtung (20) nach einem der Ansprüche 1 bis 11, die so programmiert oder ausgelegt ist, dass sie beim Betreiben der Vorrichtung (20) ein Verfahren nach einem der Ansprüche 12 - 16 ausführt.

## Claims

1. A device (20) having a workpiece spindle (21) for accommodating a bevel gear workpiece (31), a tool spindle (42) for accommodating a grinding wheel (24) with an abrasive surface (28.1, 28.2), and having a plurality of drives (B1, B2, B3) and a CNC controller (50) for the CNC-controlled machining of the bevel gear workpiece (31), wherein the grinding wheel (24), during the machining of the bevel gear workpiece (31), executes a rotation around a rotational axis (R1) of the tool spindle (42) and the grinding wheel (24) engages in the bevel gear workpiece (31) in order to remove material, and wherein the rotation around the rotational axis (R1) of the tool spindle (42) is superimposed with an eccentric movement (E), so that the grinding wheel (24) only engages at n contact regions (P1.1, P1.2) of a full circle (K1) of the abrasive surface (28.1, 28.2) in the bevel gear workpiece (31),
**characterized in that** the CNC controller (50) of the device (20) is designed for the adjusting of the eccentric movement (E), in order after a first machining phase (I), during a further machining phase (II), to specify m contact regions (P2.1, P2.2) of the full circle (K1) of the abrasive surface (28.1, 28.2), wherein the m contact regions (P2.1, P2.2) are spaced apart with respect the n contact regions (P1.1, P1.2).

2. The device (20) according to Claim 1, **characterized in that** the m contact regions (P2.1, P2.2) are spaced apart in relation to the n contact regions (P1.1, P1.2) by an angular twist at an angular distance (Δϕ), so that they do not overlap, wherein m is preferably equal to n.

3. The device (20) according to Claim 1 or 2, **characterized in that** the device (20) comprises an eccentric tool spindle (42), whose stroke points can be specified in relation to the grinding wheel (24).

4. The device (20) according to Claim 1 or 2, **characterized in that** the CNC controller (50) is configured so that is allows a distance, preferably an angular distance (Δϕ) to be specified, wherein after the first machining phase (I) the grinding wheel (24) can be twisted by the CNC controller (50) by this distance before the further machining phase (II) begins.

5. The device (20) according to one of Claims 1 to 4, **characterized in that** the following condition applies: n ≠ m.

6. The device (20) according to one of Claims 1 to 4, **characterized in that** the grinding wheel (24) is subdivided on the control side into an integral number of circular arc segments (S1, S2, S3, S4, S5, S6) and the CNC controller (50) controls the eccentric movement (E) such that all contact regions (P1.1, P1.2, P2.1, P2.2) are respectively within the circular arc segments (S1, S2, S3, S4, S5, S6) on angular positions which can be specified at the machine.

7. The device (20) according to one of Claims 1 to 4 or 6, **characterized in that** the grinding wheel (24) is subdivided into a number of circular arc segments (S1, S2, S3, S4, S5, S6), wherein at least one of these circular arc segments (S1, S2, S3, S4) is especially designed for roughing and at least one other of these circular arc segments (S1, S2) is especially designed for finishing.

8. The device (20) according to one of Claims 1 to 7, **characterized in that** the tool spindle (42) is mechanically connected to two drives (B1, B3), which are arranged coaxially to one another on the rotational axis (R1).

9. The device (20) according to one of Claims 1 to 7, **characterized in that** the tool spindle (42) is mechanically connected to two drives (B1, B3) via belts (45, 46).

10. The device (20) according to one of Claims 1 to 7, **characterized in that** the CNC controller (50) is programmed for the purpose of specifying the speeds (n1, n3) and/or a speed ratio (DV) of the rotation of the tool spindle (42) around the rotational axis (R1) and the eccentric movement (E).

11. The device (20) according to one of Claims 1 to 7, **characterized in that** the CNC controller (50) is programmed for the purpose of specifying the relative angular position of the tool spindle (42) and an eccentric mounting (E).

12. A method for machining bevel gear workpieces using a grinding wheel (24) with abrasive surface (28.1, 28.2), having the following steps:
- providing the grinding wheel (24) on a tool spindle (42),
- rotating the grinding wheel (24) around a rotational axis (R1) of the tool spindle (42),
- providing a first bevel gear workpiece (31) on a workpiece spindle (21),
- CNC-controlled execution of first grinding machining of the first bevel gear workpiece (31) using the grinding wheel (24), wherein the rotation of the grinding wheel (24) has an eccentric movement (E) superimposed such that the abrasive surface (28.1, 28.2) only engages at n contact regions (P1.1, P1.2) of a full circle (K1) in the material of the first bevel gear workpiece (31),
**characterized by the following steps:**
- CNC-controlled execution of second grinding machining of either the first bevel gear workpiece (31) or a further bevel gear workpiece using the grinding wheel (24), wherein an eccentric movement (E) is superimposed on the rotation of the grinding wheel (24) such that the abrasive surface (28.1, 28.2) only engages at m contact points (P2.1, P2.2) of the full circle (K1) in the material of the first bevel gear workpiece (31) or the further bevel gear workpiece, wherein the m contact points (P2.1, P2.2) are spatially spaced apart from the n contact points (P1.1, P1.2).

13. The method according to Claim 12, **characterized in that** the first grinding machining is roughing and the second grinding machining is finishing.

14. The method according to Claim 12 or 13, **characterized in that** the method is executed in a grinding machine (20) with CNC controller (50), wherein the CNC controller (50) at least provides the possibility of establishing or selecting
- the number n of the contact regions (P1.1, P1.2), and/or
- the number m of the contact regions (P2.1, P2.2), and/or
- a number of circular segments (S1 - S6) of the grinding wheel (24),
and/or
- a minimum circular arc length (s1) of circular segments (S1 - S6) of the grinding wheel (24), and/or
- a minimum distance between adjacent circular segments (S1 - S6) of the grinding wheel (24).

15. The method according to Claim 12 or 13, **characterized in that** the method is executed in a grinding machine (20) with CNC controller (50), wherein the CNC controller (50) at least provides the possibility of specifying the speeds (n1, n3) and/or a speed ratio (DV) of the rotation of the tool spindle (42) around the rotational axis (R1) and the eccentric movement (E).

16. The method according to Claim 12 or 13, **characterized in that** the method is executed in a grinding machine (20) with CNC controller (50), wherein the CNC controller (50) at least provides the possibility of specifying the relative angular position of the tool spindle (42) and an eccentric mount.

17. A CNC controller (50) for use in a device (20) according to one of Claims 1 to 11, which is programmed or designed such that it executes a method according to one of Claims 12 to 16 in the case of the operation of the device (20).

## Revendications

1. Dispositif (20) comprenant une broche porte-pièce (21) destinée à recevoir une roue conique (31), une broche d'outil (42) destinée à recevoir une meule (24) munie d'une surface abrasive (28.1, 28.2) et comprenant plusieurs entraînements (B1, B2, B3) et une commande CNC (50) pour usiner par commande CNC la roue conique (31), la meule (24) lors de l'usinage de la roue conique (31) effectuant une rotation autour de l'axe de rotation (R1) de la broche d'outil (42), et la meule (24) venant s'engager dans la roue conique (31) pour enlever de la matière, et un mouvement d'excentrique (E) venant se superposer à la rotation autour de l'axe de rotation (R1) de la broche d'outil (42) afin que la meule (24) ne s'engage dans la roue conique (31) qu'au niveau de n zones de contact (P1.1, P1.2) d'un tour complet (K1) de la surface abrasive (28.1, 28.2), **caractérisé en ce que** la commande CNC (50) du dispositif (20) est conçue pour régler le mouvement d'excentrique (E) de façon à déterminer, après une première phase d'usinage (I), dans le cadre d'une autre phase d'usinage (II), m zones de contact (P2.1, P2.2) du tour complet (K1) de la surface abrasive (28.1, 28.2), les m zones de contact (P2.1, P2.2) étant espacées des n zones de contact (P1.1, P1.2).

2. Dispositif (20) selon la revendication 1, **caractérisé en ce que** les m zones de contact (P2.1, P2.2) sont espacées des n zones de contact (P1.1, P1.2) par une rotation angulaire d'une distance angulaire (Δϕ) de sorte qu'elles ne se chevauchent pas, m étant de préférence égal à n.

3. Dispositif (20) selon la revendication 1 ou 2, **caractérisé en ce que** le dispositif (20) comprend une broche d'outil d'excentrique (42) dont les points de course peuvent être prédéfinis en rapport avec la meule (24).

4. Dispositif (20) selon la revendication 1 ou 2, **caractérisé en ce que** la commande CNC (50) est configurée pour permettre de déterminer une distance, de préférence une distance angulaire (Δϕ), dans lequel, après la première phase d'usinage (I), la meule (24) peut être pivotée de cette distance par la commande CNC (50) avant d'entamer l'autre phase d'usinage (II).

5. Dispositif (20) selon l'une des revendications 1 à 4, **caractérisé en ce qu'**on applique la condition suivante : n ≠ m.

6. Dispositif (20) selon l'une des revendications 1 à 4, **caractérisé en ce que** la meule (24), côté commande, est subdivisée en un nombre entier de segments d'arc de cercle (S1, S2, S3, S4, S5, S6) et **en ce que** la commande CNC (50) commande le mouvement d'excentrique (E) de sorte que toutes les zones de contact (P1.1, P1.2, P2.1, P2.2) sont toujours à l'intérieur des segments d'arc de cercle (S1, S2, S3, S4, S5, S6) à des positions angulaires prédéfinissables par la machine.

7. Dispositif (20) selon l'une des revendications 1 à 4 ou 6,
**caractérisé en ce que** la meule (24) est subdivisée en un nombre de segments d'arc de cercle (S1, S2, S3, S4, S5, S6), au moins un de ces segments d'arc de cercle (S1, S2, S3, S4) étant spécialement conçu pour le dégrossissage, et au moins un autre de ces segments d'arc de cercle (S1, S2) étant spécialement conçu pour la finition.

8. Dispositif (20) selon l'une des revendications 1 à **7, caractérisé en ce que** la broche d'outil (42) est reliée mécaniquement à deux entraînements (B1, B3) qui sont agencés de façon coaxiale l'un par rapport à l'autre au niveau de l'axe de rotation (R1).

9. Dispositif (20) selon l'une des revendications 1 à 7, **caractérisé en ce que** la broche d'outil (42) est raccordée mécaniquement à deux entraînements (B1, B3) par le biais de courroies (45, 46).

10. Dispositif (20) selon l'une des revendications 1 à 7, **caractérisé en ce que** la commande CNC (50) est programmée pour déterminer les vitesses de rotation (n1, n3) et/ou le rapport de vitesse (DV) de la rotation de la broche d'outil (42) autour de l'axe de rotation (R1) et du mouvement d'excentrique (E).

11. Dispositif (20) selon l'une des revendications 1 à 7, **caractérisé en ce que** la commande CNC (50) est programmée pour déterminer la position angulaire relative de la broche d'outil (42) et la position d'excentrique (E).

12. Procédé pour usiner des roues coniques avec une meule (24) avec une surface abrasive (28.1, 28.2), comprenant les étapes suivantes consistant à :
- installer la meule (24) sur une broche d'outil (42),
- faire tourner la meule (24) autour d'un axe de rotation (R1) de la broche d'outil (42),
- installer une première roue conique (31) sur une broche porte-pièce (21),
- réaliser par commande CNC un premier usinage par meulage de la première roue conique (31) en utilisant la meule (24), un mouvement d'excentrique (E) étant superposé à la rotation de la meule (24) de sorte que la surface abrasive (28.1, 28.2) ne s'engage dans la matière de la première roue conique (31) qu'au niveau de n zones de contact (P1.1, P1.2) d'un tour complet (K1),
**caractérisé par** les étapes consistant à :
- réaliser par commande CNC un deuxième usinage par meulage soit de la première roue conique (31) soit d'une autre roue conique, en utilisant la meule (24), un mouvement d'excentrique (E) étant superposé à la rotation de la meule (24) de sorte que la surface abrasive (28.1, 28.2) ne s'engage dans la matière de la première roue conique (31) ou de l'autre roue conique qu'au niveau de m points de contact (P2.1, P2.2) du tour complet (K1), les m points de contact (P2.1, P2.2) étant espacés des n points de contact (P1.1, P1.2).

13. Procédé selon la revendication 12, **caractérisé en ce que** le premier usinage par meulage est un usinage de dégrossissage et **en ce que** le deuxième usinage par meulage est un usinage de finition.

14. Procédé selon la revendication 12 ou 13, **caractérisé en ce que** le procédé est réalisé dans une machine à meuler (20) avec commande CNC (50), la commande CNC (50) fournissant au moins la possibilité de déterminer ou de choisir
- le nombre n de zones de contact (P1.1, P1.2), et/ou
- le nombre m de zones de contact (P2.1, P2.2), et/ou
- un nombre de segments circulaires (S1 - S6) de la meule (24), et/ou
- une longueur d'arc de cercle minimum (s1) des segments circulaires (S1 - S6) de la meule (24), et/ou
- une distance minimum entre les segments circulaires adjacents (S1-S6) de la meule (24).

15. Procédé selon la revendication 12 ou 13, **caractérisé en ce que** le procédé est réalisé dans une machine à meuler (20) avec commande CNC (50), la commande CNC (50) fournissant au moins la possibilité de déterminer les vitesses de rotation (n1, n3) et/ou un rapport de vitesse (DV) de la rotation de la broche d'outil (42) autour de l'axe de rotation (R1) et du mouvement d'excentrique (E).

16. Procédé selon la revendication 12 ou 13, **caractérisé en ce que** le procédé est réalisé dans une machine à meuler (20) avec commande CNC (50), la commande CNC (50) fournissant au moins la possibilité de déterminer la position angulaire relative de la broche d'outil (42) et une position d'excentrique.

17. Commande CNC (50) pour une utilisation dans un dispositif (20) selon l'une des revendications 1 à 11, qui est programmée ou conçue de façon à effectuer lors du fonctionnement du dispositif (20) un procédé selon l'une des revendications 12 à 16.
